(19) 

**Europäisches Patentamt**
**European Patent Office**
**Office européen des brevets**

(11) **EP 4 339 851 A1**

(12) **EUROPEAN PATENT APPLICATION**
published in accordance with Art. 153(4) EPC

(43) Date of publication:
**20.03.2024 Bulletin 2024/12**

(21) Application number: **22842003.0**

(22) Date of filing: **05.07.2022**

(51) International Patent Classification (IPC):
**G06Q 10/00** (2023.01)     **G06Q 50/04** (2012.01)

(52) Cooperative Patent Classification (CPC):
**G06Q 10/00; G06Q 50/04**

(86) International application number:
**PCT/JP2022/026718**

(87) International publication number:
**WO 2023/286659 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2021 JP 2021116247**

(71) Applicant: **Mitsubishi Heavy Industries, Ltd.
Tokyo 100-8332 (JP)**

(72) Inventors:
• **MATSUMOTO Shunsaku
Tokyo 100-8332 (JP)**
• **SUGIMURA Tadashi
Tokyo 100-8332 (JP)**

(74) Representative: **Studio Torta S.p.A.
Via Viotti, 9
10121 Torino (IT)**

(54) **FAILURE PREDICTING DEVICE, FAILURE PREDICTING METHOD, AND PROGRAM**

(57) A failure prediction device includes a first evaluation unit evaluating a failure rate which represents a probability of a random failure of a prediction target using a statistical model generated on the basis of data related to failures of the prediction target, a second evaluation unit evaluating a failure probability which represents a probability of a failure of the prediction target due to aging deterioration using a physical model generated on the basis of design data of the prediction target, an acquisition unit acquiring a qualitative evaluation result obtained by qualitatively evaluating the prediction target for each of predetermined evaluation items, and a correction unit calculating a corrected failure rate and a corrected failure probability by multiplying each of the failure rate and the failure probability by a correction coefficient based on the qualitative evaluation result.

FIG. 17

**Description**

[Technical Field]

The present disclosure relates to a failure prediction device, a failure prediction method, and a program.
Priority is claimed on Japanese Patent Application No. 2021-116247 filed on July 14, 2021, the content of which is incorporated herein by reference.

[Background Art]

Quantitative failure physical models and failure statistical data are generally used to evaluate a failure probability and a failure rate of equipment and a structure which are important in product risk management. An accuracy of quantitative prediction is greatly influenced by an accuracy of a physical model for equipment and a structure, completeness of measurement data, and presence or absence of experience in a product or business field. Therefore, in a new product or the like for which sufficient experience, measurement data, and the like have not been accumulated, there is a likelihood that a prediction accuracy of a failure probability and a failure rate will be reduced.
For example, Patent Document 1 describes a technology in which for a facility for which sufficient inspection/maintenance information, plant data, monitoring data, and the like of the facility have been accumulated, a statistical deterioration model is used to predict a service life, and for a facility for which sufficient data cannot be acquired, deterioration diagnosis is performed on the basis of a legal service life.

[Citation List]

[Patent Document]

[Patent Document 1]
Japanese Patent No. 5802619

[Summary of Invention]

[Technical Problem]

However, in factors that cause failures of a product, there are those that are difficult to assume with mathematical models such as a physical model predicting a failure probability due to aging deterioration and a statistical model predicting a random failure, such as factors that are difficult to quantitatively evaluate. Therefore, in conventional technologies, a prediction accuracy of a failure probability and a failure rate from a physical model and a statistical model may be reduced.
The present disclosure has been made in view of such problems, and provides a failure prediction device, which can predict a risk related to a failure of a prediction target with high accuracy by correcting individual prediction results of a physical model and a statistical model, a failure prediction method, and a program.

[Solution to Problem]

According to one aspect of the present disclosure, a failure prediction device includes a first evaluation unit evaluating a failure rate which represents a probability of a random failure of a prediction target using a statistical model generated on the basis of data related to failures of the prediction target, a second evaluation unit evaluating a failure probability which represents a probability of a failure of the prediction target due to aging deterioration using a physical model generated on the basis of design data of the prediction target, an acquisition unit acquiring a qualitative evaluation result obtained by qualitatively evaluating the prediction target for each of predetermined evaluation items, and a correction unit calculating a corrected failure rate and a corrected failure probability by multiplying each of the failure rate and the failure probability by a correction coefficient based on the qualitative evaluation result.
According to one aspect of the present disclosure, a failure prediction method includes a step of evaluating a failure rate which represents a probability of a random failure of a prediction target using a statistical model generated on the basis of data related to failures of the prediction target, a step of evaluating a failure probability which represents a probability of a failure of the prediction target due to aging deterioration using a physical model generated on the basis of design and manufacturing data, operation and maintenance history data of the prediction target, a step of acquiring a qualitative evaluation result obtained by qualitatively evaluating the prediction target for each of predetermined evaluation items, and a step of calculating a corrected failure rate and a corrected failure probability by multiplying each of the failure rate and the failure probability by a correction coefficient based on the qualitative evaluation result.

According to one aspect of the present disclosure, a program causes a computer of a failure prediction device to execute a step of evaluating a failure rate which represents a probability of a random failure of a prediction target using a statistical model generated on the basis of data related to failures of the prediction target, a step of evaluating a failure probability which represents a probability of a failure of the prediction target due to aging deterioration using a physical model generated on the basis of design data of the prediction target, a step of acquiring a qualitative evaluation result obtained by qualitatively evaluating the prediction target for each of predetermined evaluation items, and a step of calculating a corrected failure rate and a corrected failure probability by multiplying each of the failure rate and the failure probability by a correction coefficient based on the qualitative evaluation result.

[Advantageous Effects of Invention]

According to the failure prediction device, the failure prediction method, and the program according to the present disclosure, a risk related to a failure of the prediction target can be predicted with high accuracy.

[Brief Description of Drawings]

FIG. 1 is a diagram showing an overall configuration of a failure prediction device according to a first embodiment of the present disclosure.
FIG. 2 is a diagram showing a functional configuration of the failure prediction device according to the first embodiment of the present disclosure.
FIG. 3 is a diagram for explaining qualitative evaluation according to the first embodiment of the present disclosure.
FIG. 4 is a flowchart showing an example of processing of the failure prediction device according to the first embodiment of the present disclosure.
FIG. 5 is a first diagram showing an example of a corrected failure rate according to the first embodiment of the present disclosure.
FIG. 6 is a second diagram showing an example of the corrected failure rate according to the first embodiment of the present disclosure.
FIG. 7 is a first diagram showing an example of a corrected failure probability according to the first embodiment of the present disclosure.
FIG. 8 is a second diagram showing an example of the corrected failure probability according to the first embodiment of the present disclosure.
FIG. 9 is a third diagram showing an example of the corrected failure probability according to the first embodiment of the present disclosure.
FIG. 10 is a diagram showing a functional configuration of a failure prediction device according to a second embodiment of the present disclosure.
FIG. 11 is a flowchart showing an example of processing of the failure prediction device according to the second embodiment of the present disclosure.
FIG. 12 is a first diagram for explaining a function of a first adjustment unit according to the second embodiment of the present disclosure.
FIG. 13 is a second diagram for explaining a function of the first adjustment unit according to the second embodiment of the present disclosure.
FIG. 14 is a first diagram for explaining a function of a second adjustment unit according to the second embodiment of the present disclosure.
FIG. 15 is a second diagram for explaining a function of the second adjustment unit according to the second embodiment of the present disclosure.
FIG. 16 is a third diagram for explaining a function of the second adjustment unit according to the second embodiment of the present disclosure.
FIG. 17 is a diagram showing a functional configuration of a failure prediction device according to a third embodiment of the present disclosure.
FIG. 18 is a flowchart showing an example of processing of the failure prediction device according to the third embodiment of the present disclosure.

[Description of Embodiments]

<First embodiment>

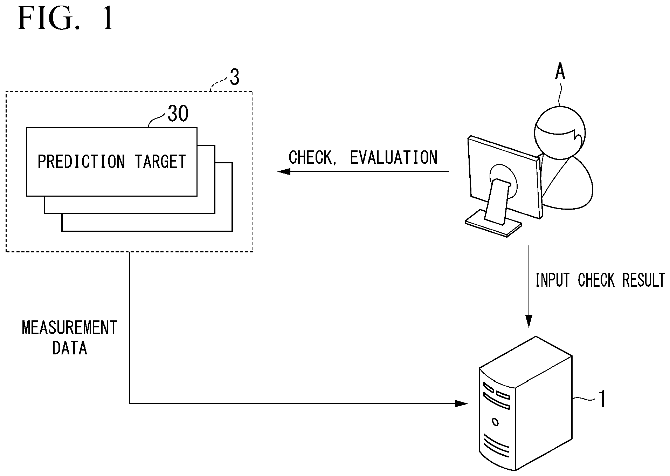

Hereinafter, a failure prediction device according to a first embodiment of the present disclosure will be described with reference to FIGS. 1 to 9.

(Overall configuration)

FIG. 1 is a diagram showing an overall configuration of the failure prediction device according to the first embodiment of the present disclosure.

A failure prediction device 1 according to the present embodiment predicts a risk related to a failure of a prediction target 30. The prediction target 30 is, for example, equipment, a structure, or the like constituting a product 3 (including a plant, a facility, or the like) such as an industrial plant (a power generation plant, a chemical plant, or the like), a ship, and a refrigeration machine.

As described above, in quantitative evaluations of a failure rate and a failure probability using a failure prediction model, for example, if there is insufficient data for generating a model or if there is an uncertain element that makes a quantitative evaluation difficult, there is a likelihood that a prediction accuracy will decrease. In order to suppress such a decrease in prediction accuracy, in the present embodiment, as shown in FIG. 1, a user A performs a qualitative evaluation for each prediction target 30 and inputs an evaluation result into the failure prediction device 1. Also, the failure prediction device 1 corrects a prediction result due to the failure prediction model on the basis of the evaluation result by the user.

(Functional configuration)

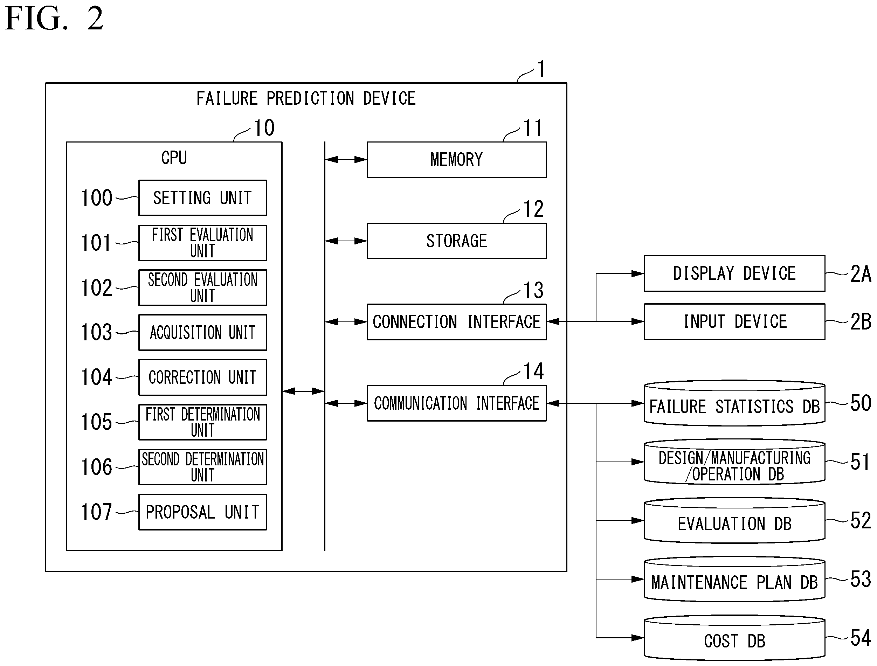

FIG. 2 is a diagram showing a functional configuration of a failure prediction device according to the first embodiment of the present disclosure.

As shown in FIG. 2, the failure prediction device 1 includes a CPU 10, a memory 11, a storage 12, a connection interface 13, and a communication interface 14.

The memory 11 is a so-called main storage device, in which instructions and data for the CPU 10 to operate on the basis of programs are decompressed.

The storage 12 is a so-called auxiliary storage device and is, for example, a hard disk drive (HDD), a solid state drive (SSD), or the like. The storage 12 stores data acquired and generated by the failure prediction device 1, data used for failure prediction, and the like.

The connection interface 13 is an interface for connecting with a display device 2A, an input device 2B, or the like. The display device 2A is a display device that displays information in a visually recognizable manner and is, for example, a liquid crystal display, an organic EL display, or the like. The input device 2B is an input device that receives an operation from the user of the failure prediction device 1 and is, for example, a general mouse, keyboard, touch sensor, or the like.

The communication interface 14 is an interface for communication connection between the failure prediction device 1 and an external device. The failure prediction device 1 according to the present embodiment is connected to be able to communicate with the prediction target 30 via the communication interface 14, and receives operation data (sensor measurement values, control command values, maintenance history, or the like) from the prediction target 30. Also, the failure prediction device 1 may be connected to be able to communicate with various databases (failure statistics DB 50, design/manufacturing/operation DB 51, evaluation DB 52, maintenance plan DB 53, cost DB 54, and the like) via the communication interface 14.

The CPU 10 is a processor that controls an operation of the entire failure prediction device 1. The CPU 10 exhibits functions as a setting unit 100, a first evaluation unit 101, a second evaluation unit 102, an acquisition unit 103, a correction unit 104, a first determination unit 105, a second determination unit 106, and a proposal unit 107 by being operated according to a predetermined program.

The setting unit 100 performs a selection of a failure prediction model to be used for predicting a failure of each of a plurality of prediction targets 30. Also, the setting unit 100 refers to a preventive maintenance plan of the prediction target 30 recorded in the maintenance plan DB 53, a maintenance cost recorded in the cost DB 54, and the like and sets an objective function of the prediction target 30 such as a reliability, an operation rate, and a maintenance cost, and a constraint condition of the prediction target 30 such as a reliability, an operation rate, and a total cost.

The failure prediction model includes a statistical model and a physical model. The statistical model outputs a failure rate that indicates how many random failures of the prediction target 30 occur during an evaluation period (for example, 10 years). The statistical model is generated in advance on the basis of data related to failures of the prediction target 30 accumulated in the failure statistics DB 50. The data related to a failure is, for example, operation history data, failure history data, maintenance history data, or the like of the prediction target 30 or similar products thereof. Also, the failure prediction model may be generated by directly referring to a failure rate database. The failure rate database is a database in which data related to a failure rate of each prediction target 30 is stored, and includes data related to a failure risk of the prediction target 30 obtained by a failure mode and effect analysis (FMEA) conducted at the time of design. Also, the failure rate database may include data obtained from a public reliability database, an independently prepared private database, a weighted combination of public data and private data, and the like.

The physical model simulates aging deterioration of the prediction target 30 and outputs a time series of failure probabilities of the prediction target 30 during an evaluation period (for example, 10 years). The physical model is generated in advance on the basis of design data, manufacturing data, operation data, maintenance history data, or the like of the prediction target 30 accumulated in the design/manufacturing/operation DB 51.

Further, the failure rate and the failure probability are associated by the following expression (1). Further, in the following expression, λ(t) represents a failure rate at time t, f(t) represents a probability density function of a failure life, R(t) represents a reliability at time t, and F(t) represents a failure probability at time t. The failure probability F(t) is a complementary event of the reliability R(t).

[Math. 1]

$$\lambda(t) = \frac{f(t)}{R(t)} = \frac{f(t)}{1 - F(t)} \qquad \cdots (1)$$

The first evaluation unit 101 evaluates a failure rate representing a probability of a random failure of the prediction target 30 using the statistical model.

The second evaluation unit 102 evaluates a failure probability representing a probability of a failure of the prediction target 30 due to aging deterioration using the physical model.

The acquisition unit 103 acquires a qualitative evaluation result obtained by qualitatively evaluating the prediction target 30 for each predetermined evaluation item.

The correction unit 104 calculates a corrected failure rate and a corrected failure probability by multiplying each of the failure rate and the failure probability by a correction coefficient based on the evaluation result of the qualitative evaluation of the prediction target 30 by the user A.

The first determination unit 105 determines whether a spare part condition of the prediction target 30 satisfies a constraint condition preset for the prediction target 30 on the basis of the corrected failure rate. The spare part condition for each prediction target 30 is recorded in advance in the maintenance plan DB 53. The spare part condition includes, for example, a quantity of the spare parts (parts for replacement at the time of failure, or the like).

The second determination unit 106 determines whether the preventive maintenance plan of the prediction target 30 satisfies the constraint condition preset for the prediction target 30 on the basis of the corrected failure probability. The preventive maintenance plan for each prediction target 30 is recorded in advance in the maintenance plan DB 53. The preventive maintenance plan includes, for example, the number, scope, timing, or the like of performing inspections, repairs, replacements, or the like of the prediction target 30.

If at least one of the first determination unit 105 and the second determination unit 106 is determined to be not satisfying the constraint condition, the proposal unit 107 proposes a review of a failure countermeasure corresponding to at least one of the evaluation items.

(About qualitative evaluation of prediction target)

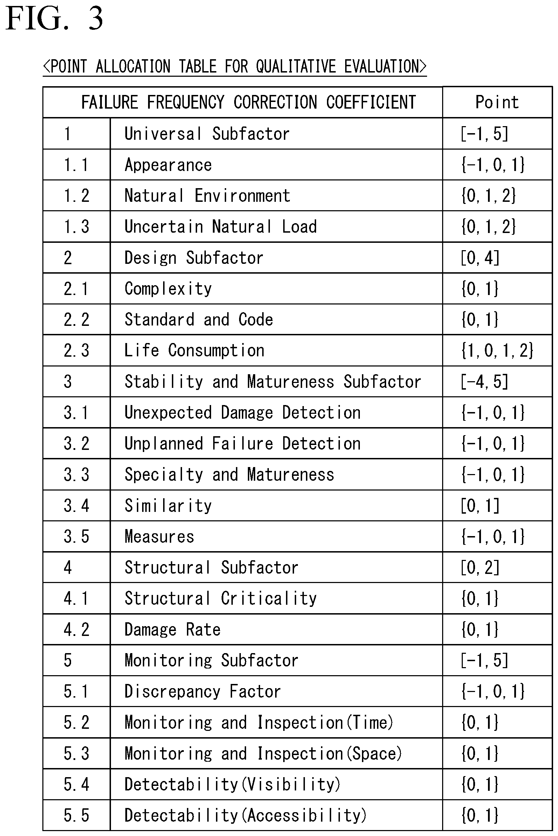

FIG. 3 is a diagram for explaining a qualitative evaluation according to the first embodiment of the present disclosure.

FIG. 3 shows an example of a point allocation table for the qualitative evaluation of the prediction target 30. In the point allocation table, an evaluation item and an evaluation point are predefined for each subfactor of a failure frequency correction coefficient (hereinafter also referred to as a "correction coefficient") of the prediction target 30. The subfactor is for connecting "anxious/uncertain elements" associated with a failure to the qualitative evaluation. The evaluation item may be common to all of the plurality of prediction targets 30. For each of the prediction targets 30, the user checks the evaluation items shown in FIG. 3 and inputs evaluation results (evaluation points for each evaluation item) according to the check results into the failure prediction device 1 or records them in the evaluation DB 52. Further, in the example of FIG. 3, a higher evaluation point indicates a higher likelihood of failure occurrence.

Also, contents of the qualitative evaluation will be described. In the example of FIG. 3, five subfactors are set as the failure frequency correction coefficient for the prediction target 30 including "Universal Subfactor," "Design Subfactor," "Stability and Matureness Subfactor," "Structural Subfactor," and "Monitoring Subfactor".

(1) Universal Subfactor

The Universal Subfactor is a general subfactor of the failure frequency correction coefficient common to all the prediction targets 30. For example, the Universal Subfactor includes evaluation items such as "Appearance," "Natural Environment," and "Uncertain Natural Load".

The Appearance is an item for evaluating an appearance (contamination, peeling of paint, or the like) of the prediction target 30 by comparing it with a standard state in a business field in which the prediction target 30 is operated. If contamination or the like is left unattended, it is considered to be in a state in which the prediction target 30 is poorly managed and a failure is likely to occur. Therefore, the user A evaluates in such a way that a higher evaluation point is given as the appearance state of the prediction target 30 becomes worse. For example, as shown in FIG. 3, the user evaluates the appearance of the prediction target 30 in three stages including "better than standard (evaluation point: -1)," "standard (evaluation point: 0)," and "worse than standard (evaluation point: +1)". Further, values of the evaluation point are an example. Thereby, factors that are difficult to collect quantitative data such as the management state of the prediction target 30 can be obtained as a quantitative evaluation result through visual confirmation by the user A. Also, since the appearance of the prediction target 30 is only evaluated in three stages by comparing it with other standard states, a time required for evaluation by the user A can be reduced. Further, for the Appearance, in order to prevent variations in evaluation results due to user subjectivity, evaluation results may be determined by consensus of a plurality of users. Also, a plurality of images showing standard states may be prepared in advance, and the failure prediction device 1 may be made to compare and evaluate the images of the prediction target 30 captured by the user.

The Natural Environment is an item that evaluates severity of an environment that is constantly experienced in a region in which the prediction target 30 is operated. For example, when the prediction target 30 is operated in a cold region or a tropical region, failures due to temperature (such as fracturing due to a low temperature or overheating due to a high temperature) are likely to occur. Also, if the prediction target 30 is a ship, a ship operated in a region with a high wave height, a high wind strength, a high water temperature, and a large amount of corrosive components (nitrate nitrogen, or the like) is more likely to experience failures (fatigue damage, corrosion, or the like) than ships operated in other regions. The user refers to statistical data on environments (air temperature, water temperature, or the like) recorded in the design/manufacturing/operation DB 51 or the like, and evaluates in such a way that a higher evaluation point is given when the severity in the operation region of the prediction target 30 is higher. Also, the user may reduce the evaluation points if the prediction target 30 has taken measures (for example, applying thicker paint, regularly applying highly durable paint, or the like) according to the environment.

The Uncertain Natural Load is an item for evaluating maximum natural loads (natural disasters such as earthquakes, tsunamis, volcanoes, typhoons, and hurricanes, an abnormal weather, or the like) that occur probabilistically in a region in which the prediction target 30 is operated. For example, it is assumed that the prediction target 30 is installed in a region with a risk of volcanic eruption. The user evaluates in such a way that a higher evaluation point is given as an amount of ash fall in the operation region of the prediction target 30 becomes larger on the basis of statistical data of an amount of volcanic ash fall during eruption, or the like. Also, in addition to the volcanic ash, the user may evaluate a magnitude and a frequency of occurrence of huge wind loads such as typhoons and hurricanes, material deterioration due to increase in temperature or humidity, and a magnitude and a frequency of occurrence of huge fluid loads such as a heavy rain.

Further, the failure prediction device 1 may automatically evaluate the Natural Environment and Uncertain Natural Load by reading statistical data on environmental and natural loads of each region recorded in the design/manufacturing/operation DB 51 or the like, and data indicating implementation status of countermeasures according to the environment of the prediction target 30.

(2) Design Subfactor

The Design Subfactor is a subfactor of the failure frequency correction coefficient related to a design of each prediction target 30. For example, the Design Subfactor includes evaluation items such as "Complexity," "Standard and Code," and "Life Consumption".

The Complexity is an item for evaluating whether the prediction target 30 has a complicated structure. In the example of FIG. 3, the user evaluates in such a way that a higher evaluation point is given as the prediction target 30 becomes more complex. Whether the structure is complicated or not is evaluated on the basis of, for example, the number of nozzles, the number of branches of piping, and the like in the prediction target 30.

The Standard and Code is an item for evaluating whether the prediction target 30 complies with design standards from the perspective that equipment and structures that comply with the design standards have a higher reliability and less prone to failure. The user evaluates in such a way that a lower evaluation point is given to the prediction target 30 that complies with the design standards. Also, the user evaluates in such a way that a higher evaluation point is given to the prediction target 30 for which there is no design standard or that does not comply with the design standards.

The Life Consumption is an item for evaluating a consumed amount of a design life of the prediction target 30. In the example of Fig. 3, the consumed amount of the design life (time of use relative to the design life) of the prediction target 30 is divided into four sections (section 1: less than n1%, section 2: n1% or more and less than n2%, section 3: n2% or more and less that n3%, and section 4: n3% or more), and evaluation points weighted by a failure frequency corresponding to each section are set. The failure frequency in each section is obtained from data (bathtub curve) indicating a failure rate of the prediction target 30 with the passage of time recorded in the design/manufacturing/operation DB 51. The user determines a section of the design life from the time of use of the prediction target 30 to determine evaluation points.

Further, the failure prediction device 1 may read the design data and operation data of the prediction target 30 recorded in the design/manufacturing/operation DB 51 to automatically evaluate each evaluation item of the Design Subfactor.

(3) Stability and Matureness Subfactor

The Stability and Matureness Subfactor is a subfactor of the failure frequency correction coefficient related to stability and matureness of the prediction target 30. For example, the Stability and Matureness Subfactor includes evaluation items such as "Unexpected Damage Detection," "Unplanned Failure Detection," "Specialty and Matureness," "Similarity," and "Measures".

The Unexpected Damage Detection is an item for evaluating a frequency of detecting unexpected damage to such an extent of not leading to a shutdown of the prediction target 30 during a periodic inspection or the like. The user A evaluates in such a way that a lower evaluation point is given when the frequency of detection is lower.

The Unplanned Failure Detection is an item for evaluating a frequency of detecting a fatal failure that requires a shutdown of the prediction target 30 during a periodic inspection or the like. The user A evaluates in such a way that a lower evaluation point is given when the frequency of detection is lower.

The Specialty and Matureness is an item for evaluating specialty and matureness of the prediction target 30. If the prediction target 30 is a mass-produced product that has been operated for a long period of time in a plurality of business fields, or if a certain number or more of equipment or structures with similar designs to the prediction target 30 are in operation, sufficient statistical data on failures of the prediction target 30 has been accumulated and uncertainty of failure prediction is small. Therefore, the user A evaluates in such a way that a lower evaluation point is given to such a prediction target 30 with low specialty and high matureness compared to non-mass-produced products that are used only in specific industries (high specialty) or products with similar designs having operational records less than a certain number (low matureness). Also, evaluation points may be increased or decreased according to an experience of a designer, a manufacturer, an operator, or the like of the prediction target 30. If equipment or a structure used in a product is a newly developed one or a special one, problems are likely to occur due to an initial failure. In the present embodiment, in the evaluation item of the Specialty and Matureness, evaluation results of the specialty and matureness of the prediction target 30 are reflected in the correction coefficient, and thereby the failure rate and failure probability in which a risk of such early failures are taken into account in the failure prediction device 1 can be evaluated.

The Similarity is an item for evaluating similarity of causes or conditions of damages or failures that occurred in the past for the prediction target 30. If a structure adjacent to the prediction target 30 is damaged due to a load, there is a likelihood that a similar load will be applied to the prediction target 30 and cause damage. Also, if a portion similar to the prediction target 30 (for example, a corresponding structure provided on an opposite side of the ship) or the same model is damaged, there is a likelihood that similar damage will occur to the prediction target 30. Therefore, for the prediction target 30 that has causes or conditions similar to equipment or the like that has damaged or failed in the past, the user A evaluates in such a way that a higher evaluation point is given to the prediction target 30 for which inspections or countermeasures have not been completed compared to those for which inspections or measures have been completed. Also, evaluation points may be made different depending on whether the prediction target 30 is similar to equipment or the like that has been damaged in the past or similar to equipment or the like that has failed in the past.

The Measures is an item for evaluating whether a cause of damage or failure of the prediction target 30 in the past has been identified and a countermeasure has been taken. The user A evaluates in such a way that a higher evaluation point is given to the prediction target 30 for which a countermeasure against the damage or failure has not been taken compared to the prediction target 30 for which a countermeasure has been taken. Also, evaluation points may be made different depending on whether details of the countermeasure are permanent or a temporary emergency measure.

Further, the failure prediction device 1 may read the failure history data and maintenance history data of the prediction target 30 recorded in the failure statistics DB 50 and automatically evaluate each evaluation item of the Stability and Matureness Subfactor.

In conventional technologies, for example, when a countermeasure against a failure is taken when the failure has occurred in a prediction target, the evaluation may be made as "it will not occur again because a countermeasure has been taken" and this may not be reflected in the prediction model. However, in practice, depending on a location of failure occurrence and contents of a failure countermeasure, there is a likelihood that the failure will recur at the same location or at the adjacent location, and this serves as a cause of decreasing a prediction accuracy of the prediction model. In contrast, in the present embodiment, trouble status of a location (equipment, structure) at which a trouble such as a failure or damage occurs, a frequency of occurrence and a countermeasure thereof, an inspection of a similar location or an adjacent location thereof, and strength examination status are evaluated in each evaluation item of the Stability and Matureness Subfactor (particularly, Unexpected Damage Detection, Unplanned Failure Detection, Similarity, and Measures). Thereby, locations of failure occurrence in the past, details of failures, details of countermeasures, and status of adjacent or similar locations can be appropriately evaluated in the qualitative evaluation. The failure prediction device 1 can accurately predict a failure risk in which failures in the past and details of the countermeasures are taken into account by applying the correction coefficient based on the qualitative evaluation result to the failure rate and the failure probability.

(4) Structural Subfactor

The Structural Subfactor is a subfactor of the failure frequency correction coefficient related to events specific to a structure. For example, the Structural Subfactor includes evaluation items such as "Structural Criticality" and "Damage Rate".

The Structural Criticality is an item for evaluating an influence of damage to the prediction target 30 (structure) on other structures. For example, if a crack occurs in the prediction target 30 and affects adjacent structures, the user A evaluates in such a way that a higher evaluation point is given to the prediction target 30 compared to a case in which the crack does not affect the adjacent structures.

The Damage Rate is an item for evaluating progression of progressive damage such as fatigue, corrosion, wear, and creep in the prediction target 30 (structure). For example, if the prediction target 30 does not use a structure or member that slows progression of cracks, the user A evaluates in such a way that a higher evaluation point is given to the prediction target 30 compared to the prediction target 30 that uses a structure or member that slows progression of cracks.

Further, the failure prediction device 1 may read the design data of the prediction target 30 recorded in the design/manufacturing/operation DB 51 to automatically evaluate each evaluation item of the Structural Subfactor.

For example, if the prediction target 30 is a structure, risks related to occurrence of damage such as cracks and progression of the cracks are different depending on each of portions. For example, when a crack occurs at a certain portion, a magnitude of the risk varies depending on whether a force in a direction of opening the crack acts or a force in a direction of closing the crack acts at a portion to which the crack is to progress. Therefore, in the present embodiment, a damage risk specific to a structure is evaluated for each portion using each evaluation item of the Structural Subfactor. The failure prediction device 1 can predict a failure risk in which the structure of the prediction target 30, an influence on the adjacent structures, and the like are taken into account with high accuracy by reflecting the evaluation results in the correction coefficient.

(5) Monitoring Subfactor

The Monitoring Subfactor is a subfactor of the failure frequency correction coefficient related to an inspection and monitoring. For example, the Monitoring Subfactor includes "Discrepancy Factor," "Monitoring and Inspection (Time)," "Monitoring and Inspection (Space)," "Detectability (Visibility)," "Detectability (Accessibility)," and the like.

The Discrepancy Factor is an item for evaluating a degree of deviation between a state quantity assumed in the design data and a state quantity measured during an actual operation. For example, of a plurality of state quantities, a state quantity (for example, temperature or the like) that contributes most significantly to damage or failure of the prediction target 30 is selected. Then, the user A evaluates in such a way that a higher evaluation point is given when a ratio between a design condition and an operating condition of the prediction target 30 is larger.

The Monitoring and Inspection (Time) is an item for evaluating intervals of inspections and monitoring. The User A evaluates in such a way that a higher evaluation point is given when a monitoring interval of the prediction target 30 is larger, and a lower evaluation point is given when the monitoring interval is smaller. Uncertainty in failure prediction can be reduced by expanding a range of the inspection or monitoring of the prediction target 30 or by reducing the interval.

The Monitoring and Inspection (Space) is an item for evaluating comprehensiveness of the inspection and monitoring. The user A divides the prediction target 30 into a plurality of portions, and evaluates in such a way that a lower evaluation point is given when the number of inspections is larger and a higher evaluation point is given when the number of inspections is smaller.

The Detectability (Visibility) is an item for evaluating ease of inspection of the prediction target 30. The user A evaluates in such a way that a higher evaluation point is given as a visual inspection of the prediction target 30 becomes more difficult.

The Detectability (Accessibility) is an item for evaluating ease of inspection of the prediction target 30. The user A evaluates in such a way that a higher evaluation point is given as it becomes more difficult to come closer to the prediction target 30 and perform the inspection.

Further, the failure prediction device 1 may automatically evaluate each evaluation item of the Monitoring Subfactor on the basis of the design data and operation data recorded in the design/manufacturing/operation DB 51, the preventive maintenance plan recorded in the maintenance plan DB 53, and the like.

Further, the evaluation items, evaluation stages, and the point allocation shown in FIG. 3 are examples, and the present invention is not limited thereto. These contents may be arbitrarily changed according to models of the prediction target 30, operational purposes (business fields) of the prediction target 30, or the like. Also, the user A may exclude an evaluation item that has been incorporated into the statistical model or the physical model from an object of the qualitative evaluation. Alternatively, when the correction coefficient is calculated, the correction unit 104 of the failure prediction device 1 may exclude an evaluation point of the evaluation item that has been incorporated into the statistical model or the physical model. For example, the user A can arbitrarily set which evaluation item is to be used when the correction unit 104 calculates the correction coefficient.

(Processing flow)

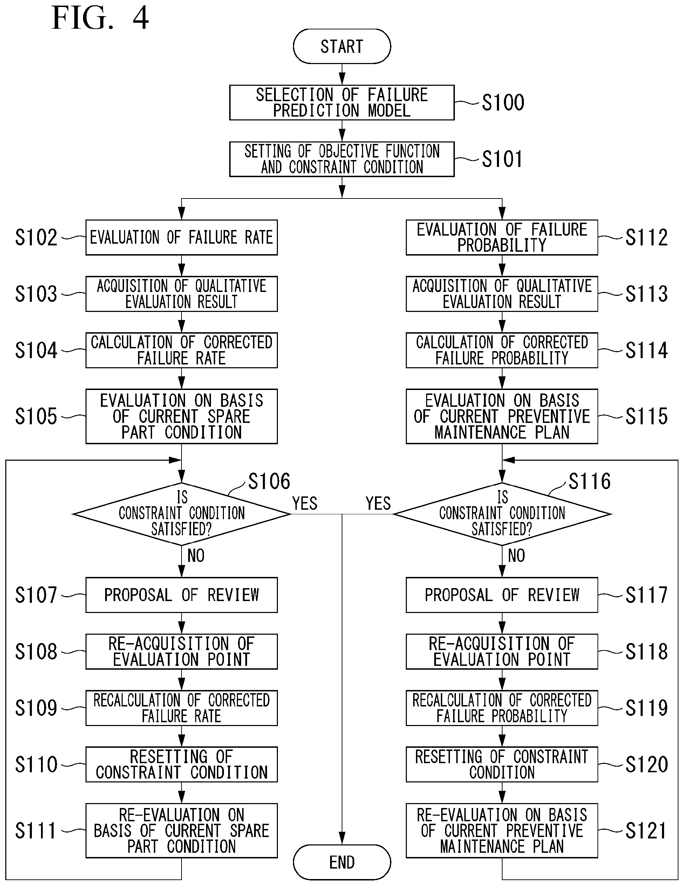

FIG. 4 is a flowchart showing an example of processing of the failure prediction device according to the first embodiment of the present disclosure.

Hereinafter, a method of evaluating a failure rate and a failure probability and a method of evaluating a spare part condition and a preventive maintenance plan using the failure prediction device 1 will be described with reference to FIG. 4.

First, the setting unit 100 selects a failure prediction model to be used for predicting the failure rate and failure probability for each of all the prediction targets 30 of the product 3 (step S100). For example, the setting unit 100 selects a failure prediction model according to an operation of the user A through the input device 2B.

Also, the setting unit 100 sets an objective function and a constraint condition related to a maintenance of the prediction target 30 (step S101). The objective function includes, for example, a reliability, an operation rate, a maintenance cost, and the like of the product 3. Also, the constraint condition includes lower limit values of the reliability and the operation rate of the product 3, an upper limit value of the total cost, and the like. For example, the setting unit 100 sets the objective function and the constraint condition according to an operation of the user A through the input device 2B.

Next, the failure prediction device 1 evaluates and corrects a failure rate and failure probability of the prediction target 30.

First, a method of evaluating and correcting the failure rate will be explained. The first evaluation unit 101 calculates the failure rate of the prediction target 30 on the basis of the statistical model selected by the setting unit 100 (step S102). If there are the plurality of prediction targets 30, the first evaluation unit 101 calculates the failure rate for each of all the prediction targets 30.

Next, the acquisition unit 103 acquires a qualitative evaluation result of the prediction target 30 by the user A (step S103). For example, the acquisition unit 103 acquires the qualitative evaluation result input by the user A through the input device 2B. Also, if the user A records the qualitative evaluation result in the evaluation DB 52, the acquisition unit 103 may read the qualitative evaluation result of the prediction target 30 from the evaluation DB 52.

The correction unit 104 calculates a corrected failure rate by multiplying the failure rate calculated in step S102 by a correction coefficient based on the qualitative evaluation result (step S104). The correction unit 104 according to the present embodiment uses a total value of evaluation points of the evaluation items in the qualitative evaluation as the correction coefficient. Further, in another embodiment, if the total value of the evaluation points is a negative value, the correction unit 104 may use a reciprocal number of an absolute value of the evaluation points or an index as the correction coefficient.

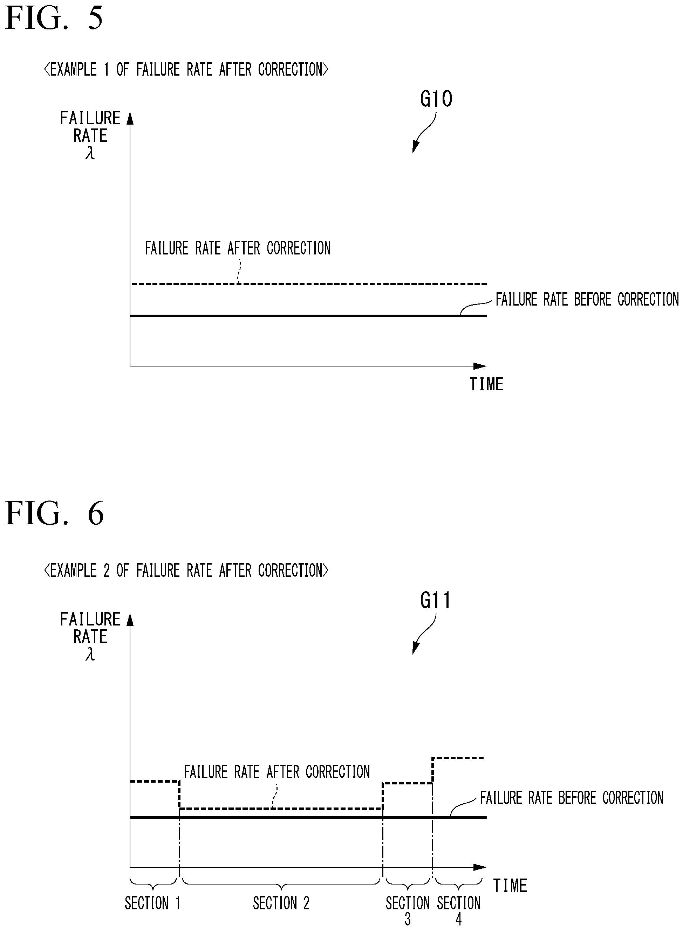

FIG. 5 is a first diagram showing an example of the corrected failure rate according to the first embodiment of the present disclosure.

A graph G10 shown in FIG. 5 is an example of the failure rate and the corrected failure rate over a certain evaluation period (for example, over 10 years from now). The solid line in the graph G10 indicates the failure rate (failure rate before correction) calculated by the first evaluation unit 101. Also, the broken line in the graph G10 indicates the corrected failure rate calculated by the correction unit 104 by multiplying the failure rate before correction by the correction coefficient. In this way, the correction unit 104 can calculate the corrected failure rate in which elements that cannot be considered in the statistical model such as, for example, a management state, an operational record, and a monitoring interval of each of the prediction targets 30 are taken into account.

FIG. 6 is a second diagram showing an example of the corrected failure rate according to the first embodiment of the present disclosure.

As shown in the graph G11 of FIG. 6, the correction unit 104 may change the correction coefficient according to a consumed amount of the design life by simulating the bathtub curve of the prediction target 30. For example, as shown in FIG. 3, it is assumed that different values such as {1, 0, 1, 2} are set for the evaluation points of the Life Consumption according to the sections (the section 1 to the section 4) of time of use of the prediction target 30. The correction unit 104 obtains four correction coefficients respectively corresponding to the sections by summing the evaluation points of the Life Consumption and other evaluation points for each section of the Life Consumption. The correction unit 104 obtains a correction coefficient of the section 1 by summing the evaluation point "1" of the section 1 of the Life Consumption and evaluation points of other evaluation items. Also, the correction unit 104 obtains a correction coefficient of the section 2 by summing the evaluation point "0" of the section 2 of the Life Consumption and the evaluation points of other evaluation items. The correction unit 104 similarly obtains correction coefficients of sections 3 and 4. The broken line in the graph G11 indicates a corrected failure rate calculated by the correction unit 104 by multiplying the failure rate before correction by the correction coefficients of the sections 1 to 4. In this way, the correction unit 104 can obtain a more accurate corrected failure rate according to the consumed amount (time of use) of the design life of the prediction target 30.

Also, if there are the plurality of prediction targets 30, the correction unit 104 calculates the corrected failure rates of all the prediction targets 30, respectively.

Next, the first determination unit 105 evaluates the reliability and operation rate of the prediction target 30, and the total cost including a spare part holding cost of the prediction target 30 on the basis of the corrected failure rate, a current spare part condition (the number of spare parts) of the prediction target 30, and an evaluation period (step S105).

Also, the first determination unit 105 determines whether the reliability, the operation rate, and the total cost evaluated in step S105 satisfy the constraint condition set in step S101 (step S106).

If the first determination unit 105 determines that all of the reliability, the operation rate, and the total cost satisfy the constraint condition (step S106: YES), the failure prediction device 1 ends the processing.

On the other hand, if the first determination unit 105 determines that at least one of the reliability, the operation rate, and the total cost does not satisfy the constraint condition (step S106: NO), the proposal unit 107 proposes a review of a failure countermeasure for the prediction target 30 (step S 107).

Then, the user A performs a review of the failure countermeasure and then performs the qualitative evaluation again so that the evaluation point for at least one evaluation item changes. For example, if the reliability of the prediction target 30 is lower than the constraint condition, the user A performs a review of the failure countermeasure so that the reliability satisfies the constraint condition, that is, the correction coefficient (evaluation point of the qualitative evaluation) becomes smaller. Specifically, if the prediction target 30 is newly developed equipment and there is room for a design change, when a measure to change parts constituting the prediction target 30 to mass-produced products with high matureness is taken, the evaluation point for the Specialty and Matureness can be lowered. Also, when a measure to reduce a monitoring interval of the prediction target 30 and increase the number of locations to be monitored is taken, the evaluation point for the Monitoring and Inspection can be lowered. Further, if it is before designing and manufacturing, it is possible to reduce an original failure probability by making the prediction target 30 compliant with the design standards to lower the evaluation point for the Design, changing design conditions to reduce the load, or improving a strength of the material.

Next, the acquisition unit 103 reacquires the qualitative evaluation result of the prediction target 30 by the user A (step S108). Then, the first evaluation unit 101 recalculates the corrected failure rate using the correction coefficient based on the reacquired qualitative evaluation result (step S109). Processing of these is similar to that in steps S103 and S104.

Also, the user A may perform a review of the constraint condition (the reliability, the operation rate, and the total cost). When a changed constraint condition is input by the user A, the setting unit 100 performs resetting of the constraint condition (step S110).

The first determination unit 105 performs re-evaluation of the reliability, the operation rate, and the total cost of the product 3 on the basis of the corrected failure rate of each prediction target 30 recalculated in step S108 and the current spare part condition of the prediction target 30 (step S111). Thereafter, the processing returns to step S106, and the first determination unit 105 determines whether the re-evaluated reliability, operation rate, and total cost satisfy the constraint condition. The failure prediction device 1 repeatedly executes the processing of steps S107 to Sill until the constraint condition is satisfied.

Next, a method for evaluating and correcting the failure probability will be explained. The second evaluation unit 102 calculates the failure probability of the prediction target 30 on the basis of the physical model selected by the setting unit 100 (step 5112). If there are the plurality of prediction targets 30, the second evaluation unit 102 calculates the failure probability for each of all the prediction targets 30.

Next, the acquisition unit 103 acquires the qualitative evaluation result of the prediction target 30 by the user A (step S113). The processing is similar to that in step S103.

The correction unit 104 calculates a corrected failure probability by multiplying the failure probability calculated in step S111 by the correction coefficient based on the qualitative evaluation result (step S114). The correction unit 104 according to the present embodiment obtains a total value of the evaluation points as the correction coefficient similarly to that in step S104. Also, in another embodiment, if the total value of the evaluation points is a negative value, the correction unit 104 may use a reciprocal number of an absolute value of the evaluation points or an index as the correction coefficient.

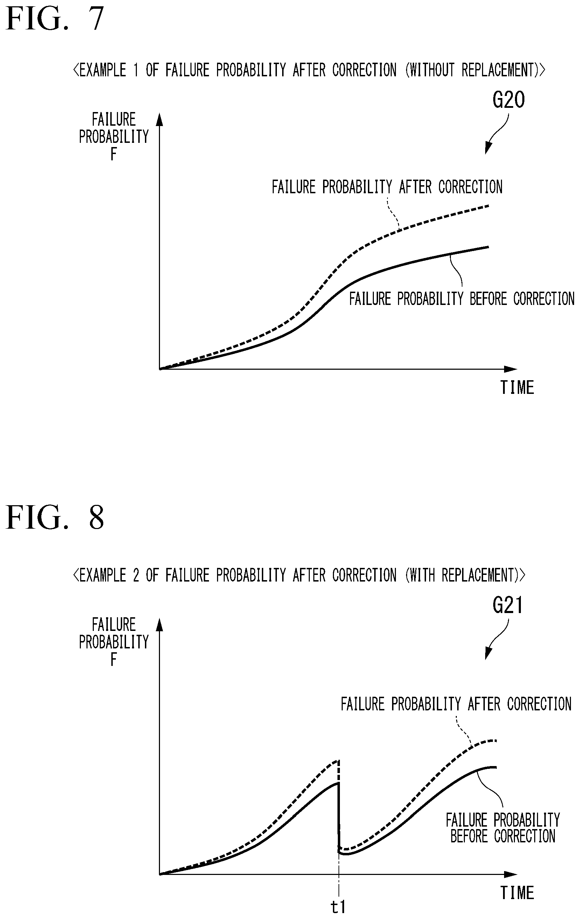

FIG. 7 is a first diagram showing an example of the corrected failure probability according to the first embodiment of the present disclosure.

A graph G20 shown in FIG. 7 is an example of a time series of the failure probability and the corrected failure probability over a certain evaluation period (for example, over 10 years from now). The solid line in the graph G20 indicates a time series of the failure probability (failure probability before correction) calculated by the second evaluation unit 102. Also, the broken line in the graph G20 indicates a time series of the corrected failure probability calculated by the correction unit 104 by multiplying the failure probability before correction by the correction coefficient. In this way, the correction unit 104 can calculate the corrected failure probability in which elements that are difficult to consider in the physical model such as, for example, a management state, an operational record, and a monitoring interval of each of the prediction targets 30 are taken into account.

FIG. 8 is a second diagram showing an example of the corrected failure probability according to the first embodiment of the present disclosure.

The prediction target 30 may be replaced with a new one in the middle of the evaluation period. In the example of FIG. 8, it is assumed that the prediction target 30 is replaced at a time t1. At this time, the failure probability predicted from the physical model (failure probability before correction) decreases once at the time of replacement (time t1), but increases again with the elapse of time as indicated by the solid line in a graph G21. The correction unit 104 calculates a time series of the corrected failure probability as indicated by the broken line in the graph G21 by multiplying this failure probability before correction by the correction coefficient. In this way, the correction unit 104 can also calculate the corrected failure probability of the prediction target 30 that is replaced, repaired, or the like during the evaluation period by using the correction coefficient.

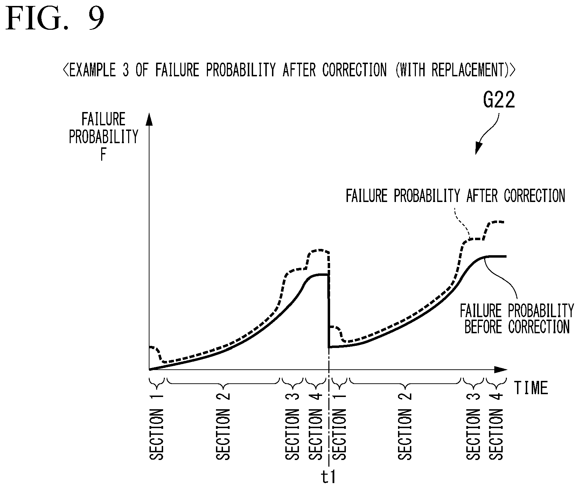

FIG. 9 is a third diagram showing an example of the corrected failure probability according to the first embodiment of the present disclosure.

As shown in the graph G22 of FIG. 9, the correction unit 104 may change the correction coefficient according to a consumed amount of the design life by simulating the bathtub curve of the prediction target 30. For example, the correction unit 104 obtains four correction coefficients respectively corresponding to the sections by summing the evaluation points of the Life Consumption and other evaluation points for each section of the Life Consumption. The broken line in the graph G22 indicates the corrected failure probabilities calculated by the correction unit 104 by multiplying the failure probability before correction by the correction coefficient for each section. As in the example of FIG. 9, if the prediction target 30 is replaced in the middle of the evaluation period, the correction unit 104 calculates the corrected failure probabilities multiplied by the correction coefficient for each section for each period before and after the replacement (a period before the time t1 and a period after the time t1). Further, when replacement is not performed as in the example of FIG. 7, the correction unit 104 divides the entire evaluation period into four sections, and obtains the corrected failure probabilities by multiplying the correction coefficient for each section. In the physical model predicting the failure probability due to aging deterioration, it is difficult to simulate an initial failure (failure probability in section 1) represented by the bathtub curve. However, when the bathtub curve of the prediction target 30 is taken into account in this way, the correction unit 104 can calculate the corrected failure probability in which the initial failure, that is difficult to predict using a physical model, is reflected.

Also, when there are the plurality of prediction targets 30, the correction unit 104 calculates the corrected failure probability for each of all the prediction targets 30.

Next, the second determination unit 106 evaluates the reliability, the operation rate, and the total cost of the prediction target 30 on the basis of the corrected failure probability and the current preventive maintenance plan of the prediction target 30 (preventive maintenance plan such as the number of times and timing of inspection, repair, replacement, and the like of the prediction target 30) (step S115).

Also, the second determination unit 106 determines whether the reliability, the operation rate, and the total cost evaluated in step S115 satisfy the constraint condition set in step S101 (step S116).

If the second determination unit 106 determines that all of the reliability, the operation rate, and the total cost satisfy the constraint condition (step S116: YES), the failure prediction device 1 ends the processing.

On the other hand, if the second determination unit 106 determines that at least one of the reliability, the operation rate, and the total cost does not satisfy the constraint condition (step S116: NO), the proposal unit 107 proposes a review of a failure countermeasure for the prediction target 30 (step S117). This processing is similar to that in step S107. The user A performs a review of the failure countermeasure and then performs the qualitative evaluation again so that the evaluation point for at least one evaluation item changes.

Next, the acquisition unit 103 reacquires the qualitative evaluation result of the prediction target 30 by the user A (step S118). Then, the second evaluation unit 102 recalculates the corrected failure probability using the correction coefficient based on the reacquired qualitative evaluation result (step S119). Processing of these is similar to that in steps S113 and S114.

Also, the user A may also review the constraint condition (the reliability, the operation rate, and the total cost). When a changed constraint condition is input by user A, the setting unit 100 performs resetting of the constraint condition (step S120).

The second determination unit 106 performs re-evaluation of the reliability, the operation rate, and the total cost of the product 3 on the basis of the corrected failure probability of each prediction target 30 recalculated in step S119 and the current preventive maintenance plan of the prediction target 30 (step S121). Thereafter, the processing returns to step S116, and the second determination unit 106 determines whether the re-evaluated reliability, operation rate, and total cost satisfy the constraint condition. The failure prediction device 1 repeatedly executes the processing of steps S117 to S121 until the constraint condition is satisfied.

The correction unit 104 may calculate a common correction coefficient for the failure rate and the failure probability or may calculate different correction coefficients from the qualitative evaluation result. For example, if there is an evaluation item that has been incorporated into the physical model or the statistical model among the evaluation items of the qualitative evaluation (FIG. 3), the correction unit 104 may exclude an evaluation point of the evaluation item from the correction coefficient. Specifically, if the failure rate is calculated from failure statistics of equipment and a facility with the same degree of complexity as the prediction target 30, the correction unit 104 calculates the correction coefficient for the failure rate by excluding an evaluation point of the Complexity. Alternatively, if a complexity of the structure of the prediction target 30 is taken into consideration in a structural analysis model (physical model) such as a finite element model (FEM), the correction unit 104 calculates the correction coefficient for the failure probability by excluding the evaluation point of the Complexity. Also, for example, if evaluation contents (wave height and the like) of the Natural Environment are taken into consideration in the physical model, the correction coefficient for the failure probability may be calculated by excluding an evaluation point of the Natural Environment. Thereby, the correction unit 104 can correct the failure rate and the failure probability with higher accuracy.

(Operation and effects)

As described above, the failure prediction device 1 according to the present embodiment includes the first evaluation unit 101 evaluating a failure rate of the prediction target 30 using a statistical model, the second evaluation unit 102 evaluating a failure probability of the prediction target 30 using a physical model, the acquisition unit 103 acquiring a qualitative evaluation result obtained by qualitatively evaluating the prediction target 30 for each of predetermined evaluation items, and the correction unit 104 calculating a corrected failure rate and a corrected failure probability by multiplying each of the failure rate and the failure probability by a correction coefficient based on the qualitative evaluation result.

In this way, the failure prediction device 1 can predict a risk related to a failure of the prediction target 30 with high accuracy by correcting the prediction results of the failure rate and the failure probability. Also, when the correction coefficient based on the qualitative evaluation result of the prediction target 30 is applied to both the failure rate and the failure probability, the failure prediction device 1 can evaluate both the random failure and the failure due to aging deterioration from a common perspective of a likelihood of failure.

Also, the failure prediction device 1 further includes the first determination unit 105 determining whether the spare part condition of the prediction target 30 satisfies the constraint condition on the basis of the corrected failure rate, the second determination unit 106 determining whether the preventive maintenance plan of the prediction target 30 satisfies the constraint condition on the basis of the corrected failure probability, and the proposal unit 107 proposing a review of a failure countermeasure corresponding to at least one of the evaluation items when at least one of the first determination unit 105 and the second determination unit 106 is determined to be not satisfying the constraint condition.

In this way, the failure prediction device 1 can more accurately evaluate whether the prediction target 30 satisfies the constraint condition using the failure rate and failure probability after correction by the qualitative evaluation result. Also, if the prediction target 30 does not satisfy the constraint condition, the failure prediction device 1 can propose a review of a failure countermeasure for the prediction target 30 to the user A.

<Second embodiment>

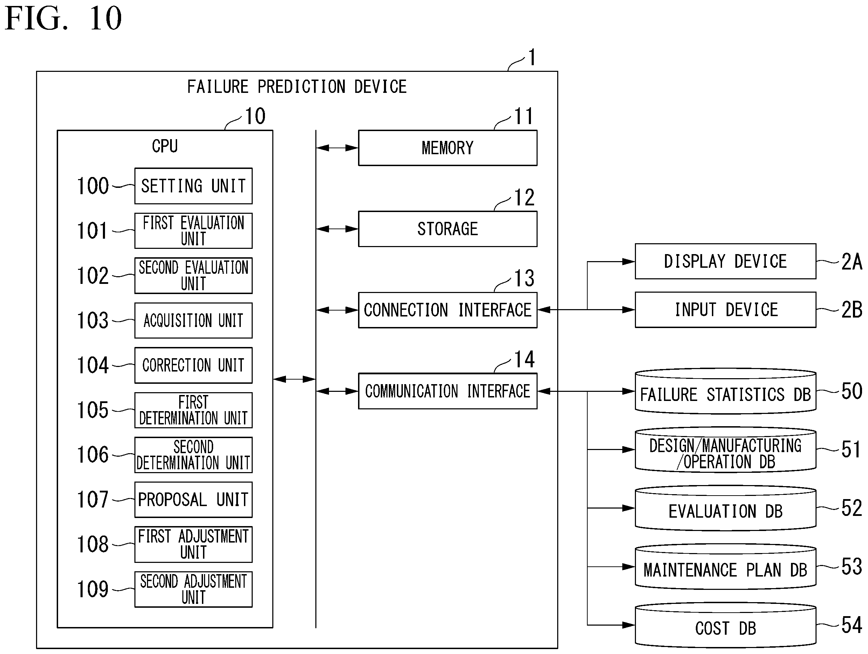

Next, a failure prediction device 1 according to a second embodiment of the present disclosure will be described with reference to FIGS. 10 to 16. Components common to those in the first embodiment will be denoted by the same reference signs, and detailed description thereof will be omitted.

(Functional configuration)

FIG. 10 is a diagram showing a functional configuration of a failure prediction device according to the second embodiment of the present disclosure.

As shown in FIG. 10, a CPU 10 of the failure prediction device 1 according to the present embodiment further has functions of a first adjustment unit 108 and a second adjustment unit 109.

The first adjustment unit 108 adjusts a spare part condition on the basis of a corrected failure rate.

The second adjustment unit 109 adjusts a preventive maintenance plan on the basis of a corrected failure probability.

(Processing flow)

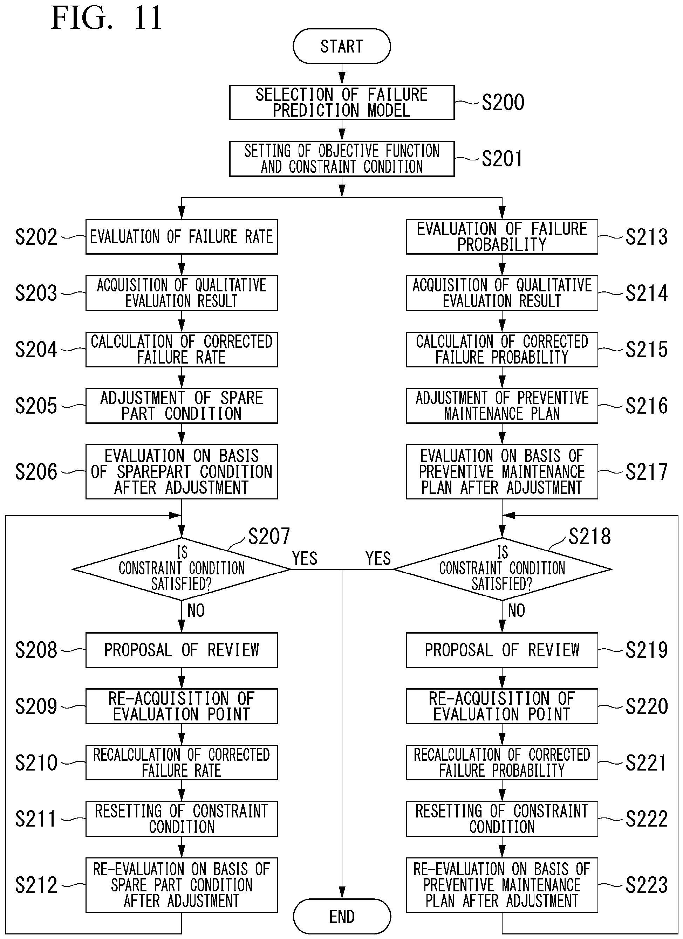

FIG. 11 is a flowchart showing an example of processing of the failure prediction device according to the second embodiment of the present disclosure.

Hereinafter, a method of evaluating a failure rate and a failure probability and a method of evaluating a spare part condition and a preventive maintenance plan using the failure prediction device 1 will be described with reference to FIG. 11.

First, a setting unit 100 performs a selection of a failure prediction model (step S200) and a setting of an objective function and a constraint condition (step S201). Processing of these is the same as that in the first embodiment (steps S100 and S101 in FIG. 4).

Next, the failure prediction device 1 evaluates and corrects a failure rate of a prediction target 30 in steps S202 to S204. Further, processing in steps S202 to S204 is the same as that in the first embodiment (steps S102 to S104 in FIG. 4).

Next, the first adjustment unit 108 adjusts a spare part condition of the prediction target 30 (step S205). For example, it is assumed that a product 3 is a facility used for production. When the prediction target 30 has failed, if a spare part has not been prepared, a period of downtime of the product 3 increases, and an amount of loss due to production loss increases. If a sufficient number of spare parts have been prepared, the production loss can be reduced. On the other hand, having a larger number of spare parts leads to an increase in costs related to spare parts. Therefore, the first adjustment unit 108 determines the number of spare parts that can maximize an amount of production loss reduction (that is, that can maximize a profit due to spare parts) while minimizing an increase in cost of the spare parts.

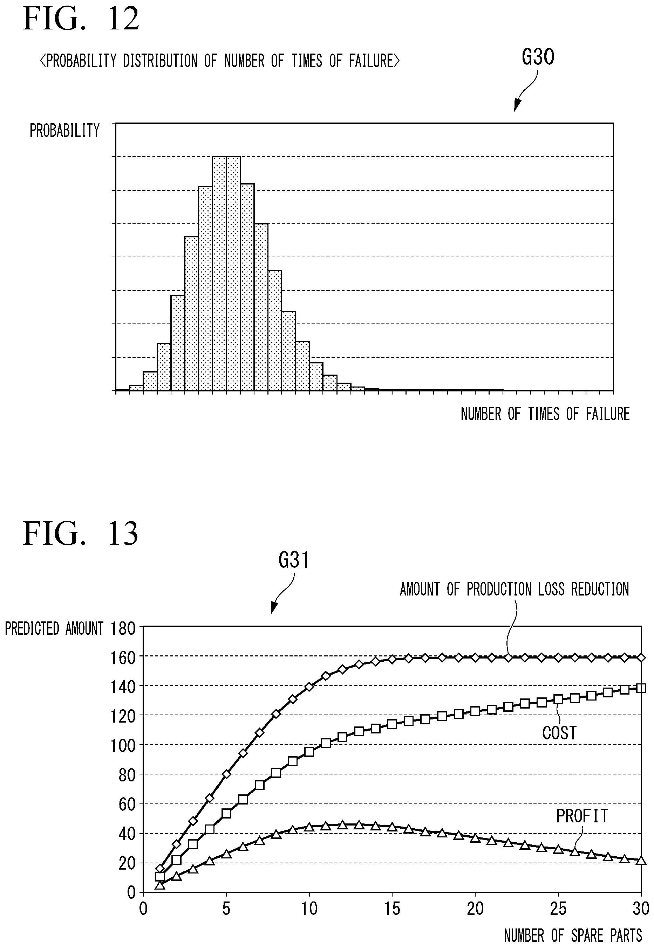

FIG. 12 is a first diagram for explaining a function of the first adjustment unit according to the second embodiment of the present disclosure.

As shown in FIG. 12, the first adjustment unit 108 obtains a probability distribution G30 of the number of times of failure in an evaluation period (for example, for 10 years) of the prediction target 30 on the basis of the corrected failure rate.

FIG. 13 is a second diagram for explaining a function of the first adjustment unit according to the second embodiment of the present disclosure.

Also, the first adjustment unit 108 obtains a function representing the amount of production loss reduction, the cost of spare parts, and the profit due to spare parts as an index (KPI) for evaluating the number of spare parts on the basis of the probability distribution G30 of the number of times of failure. The graph G31 in FIG. 13 represents a predicted amount of the amount of production loss reduction, the cost of spare parts, and the profit due to spare parts according to the number of spare parts. In the example of FIG. 13, since an amount of profit is maximum when the number of spare parts is 12, the first adjustment unit 108 sets the spare part condition (the number of spare parts) of the prediction target 30 to "12".

Next, a first determination unit 105 evaluates a reliability and an operation rate of the prediction target 30 and a total cost related to a maintenance of the prediction target 30 on the basis of the corrected failure rate and the spare part condition (the number of spare parts) of the prediction target 30 adjusted in step S205 (step S206). Processing in the subsequent steps S207 to S212 is the same as that in the first embodiment (steps S106 to Sill in FIG. 4).

Further, the failure prediction device 1 evaluates and corrects a failure probability of the prediction target 30 in steps S213 to S215. Further, processing in steps S213 to S215 is the same as that in the first embodiment (steps S112 to 5114 in FIG. 4).

Next, the second adjustment unit 109 adjusts a preventive maintenance plan (such as the number of times and timing of inspection, repair, replacement, and the like of the prediction target 30) (step S216). The second adjustment unit 109 uses, for example, a method of risk-based maintenance (RBM) to calculate a failure risk of the prediction target 30 and adjust a maintenance cycle (for example, a replacement cycle).

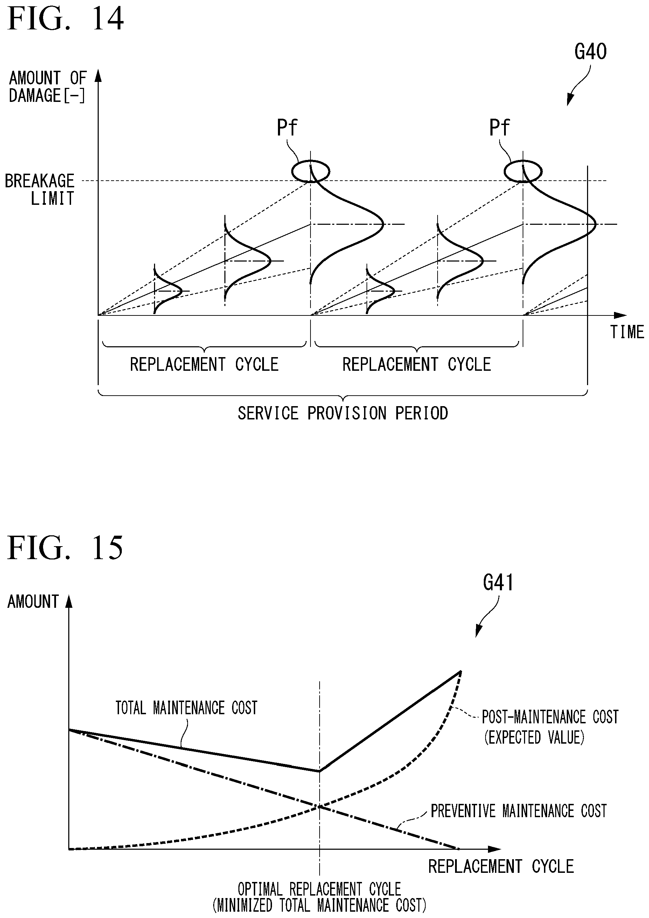

FIG. 14 is a first diagram for explaining a function of the second adjustment unit according to the second embodiment of the present disclosure.

The graph G40 shown in FIG. 14 is a simulation of an amount of damage to the prediction target 30 with uncertainty from the worst case to the best case assumed regarding a degree of progression of deterioration occurring in the prediction target 30 being set as a probability distribution. In the example of FIG. 14, the prediction target 30 is replaced twice at predetermined intervals during the evaluation period (service provision period). Also, in each replacement cycle, a probability Pf in which an amount of damage to the prediction target 30 exceeds a breakage limit represents a failure probability of the prediction target. The second adjustment unit 109 obtains an expected value of the number of time of failure of the prediction target 30 during the evaluation period using a corrected failure probability obtained by multiplying the failure probability Pf by a correction coefficient.

FIG. 15 is a second diagram for explaining a function of the second adjustment unit according to the second embodiment of the present disclosure.

The second adjustment unit 109 obtains a preventive maintenance cost and an expected value of a post-maintenance cost of the prediction target 30 on the basis of the expected value of the number of times of failure of the prediction target 30. The preventive maintenance cost is a cost required to replace the prediction target 30. The post-maintenance cost is obtained as an expected value by multiplying a cost required for actual post-maintenance by the corrected failure probability. The graph G41 in FIG. 15 shows an example of a relationship between a length of the replacement cycle of the prediction target 30, the preventive maintenance cost, the post-maintenance, and a total maintenance cost, which is a sum of the preventive maintenance cost and the post-maintenance cost, of the prediction target 30. The preventive maintenance cost reduces as the replacement cycle becomes larger. On the other hand, the post-maintenance cost increases as the replacement cycle of the prediction target 30 becomes larger. The second adjustment unit 109 sets the replacement cycle that minimizes the total maintenance cost, which is a sum of the preventive maintenance cost and the post-maintenance cost, as an optimal replacement cycle.

Also, for example, if the prediction target 30 is a structure formed of a plurality of members, a maintenance may be performed to replace a part of the prediction target 30 in each replacement cycle. In this case, the second adjustment unit 109 may set a replacement portion (range of maintenance) for each replacement cycle. For example, of the members constituting the prediction target 30, the second adjustment unit 109 sets such that members in top X% with high failure probabilities are replaced in each replacement cycle. Further, since the failure probability of the replaced member decreases, the member to be replaced each time varies. Thereby, the second adjustment unit 109 can set a preventive maintenance plan that can reduce preventive maintenance costs compared to a case of replacing all members at every replacement cycle while ensuring that the prediction target 30 does not exceed the breakage limit.

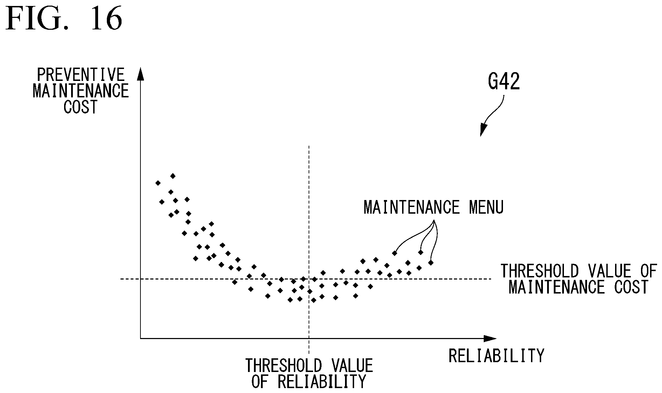

FIG. 16 is a third diagram for explaining a function of the second adjustment unit according to the second embodiment of the present disclosure.

The second adjustment unit 109 may be configured to accept a selection of a maintenance menu (preventive maintenance cycle, range of maintenance) by the user A. At this time, for example, as shown in FIG. 16, the second adjustment unit 109 presents the user A with a graph G42 indicating a Pareto efficiency for each maintenance menu. The graph G42 is an example showing a relationship between the preventive maintenance cost and the reliability for each maintenance menu. A threshold value of the reliability and a threshold value of the maintenance cost indicate the constraint condition set in step S101. Further, in another embodiment, the graph G42 may represent a relationship between the reliability and the total cost, or the total cost and the preventive maintenance cost. The total cost is a sum of the preventive maintenance cost and a degree of impact of trouble, and the degree of impact of trouble includes restoration work costs, trouble investigation costs, and production loss during downtime caused by failures. The user A refers to the graph G42 and selects a maintenance menu that satisfies both constraint conditions of the reliability and the maintenance cost. Also, the user A may check contents of the maintenance menu that satisfy the constraint condition and select the most suitable one. The second adjustment unit 109 sets the preventive maintenance plan on the basis of the maintenance menu selected by the user A.

Next, the second determination unit 106 performs an estimation of the reliability and the operation rate of the prediction target 30 and the total cost related to the maintenance of the prediction target 30 on the basis of the corrected failure probability and the preventive maintenance plan of the prediction target 30 adjusted in step S217 (step S217). Processing in the subsequent steps S218 to S223 is the same as that in the first embodiment (steps S116 to S121 in FIG. 4).

(Operation and effects)

As described above, the failure prediction device 1 according to the present embodiment further includes the first adjustment unit 108 adjusting the spare part condition on the basis of the corrected failure rate.

In this way, the failure prediction device 1 can set an optimal spare part condition with high accuracy on the basis of the corrected failure rate.

Also, the failure prediction device 1 further includes the second adjustment unit 109 adjusting the preventive maintenance plan on the basis of the corrected failure probability.

In this way, the failure prediction device 1 can set an optimal preventive maintenance plan with high accuracy on the basis of the corrected failure probability.

<Third embodiment>

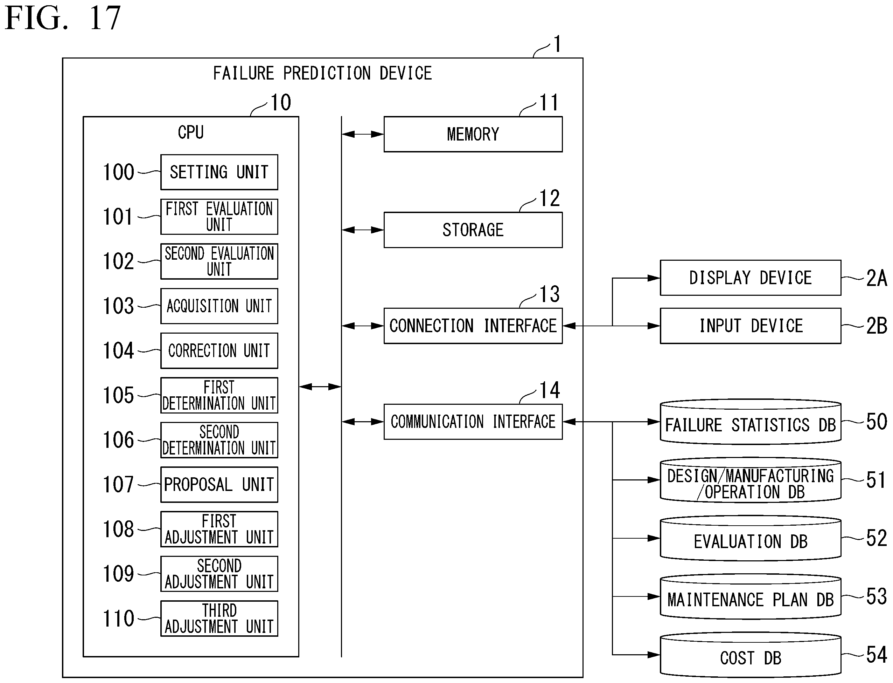

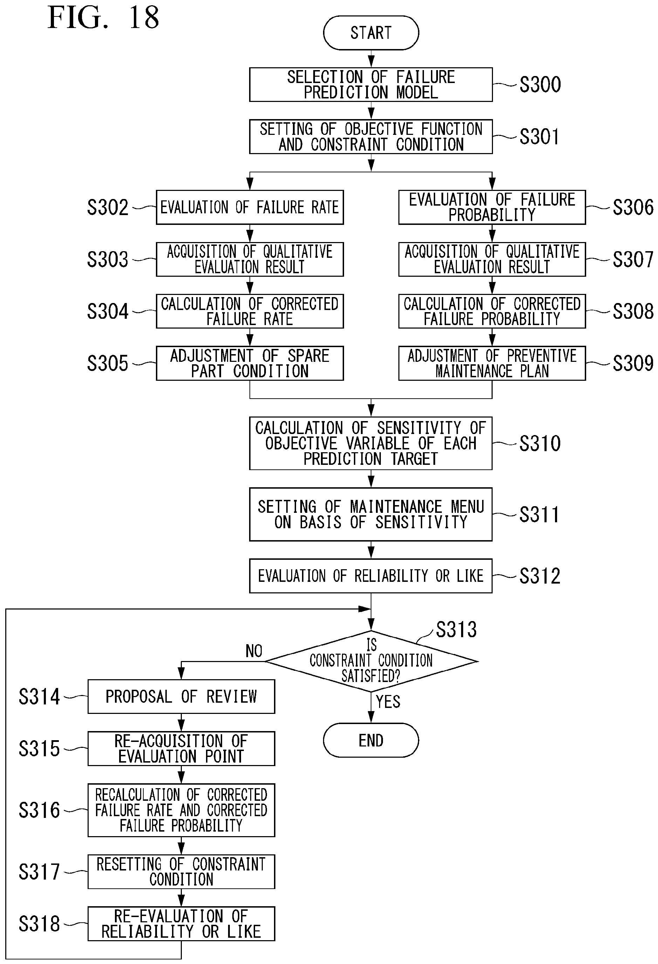

Next, a failure prediction device 1 according to a second embodiment of the present disclosure will be described with reference to FIGS. 17 and 18. Components common to those in the first and second embodiments will be denoted by the same reference signs, and detailed description thereof will be omitted.

(Functional configuration)

FIG. 17 is a diagram showing a functional configuration of a failure prediction device according to the third embodiment of the present disclosure.
As shown in FIG. 17, a CPU 10 of the failure prediction device 1 according to the present embodiment further has a function of a third adjustment unit 110.
The third adjustment unit 110 adjusts a spare part condition and a preventive maintenance plan of each of a plurality of prediction targets so that a constraint condition preset for an entire product 3 is satisfied on the basis of a corrected failure rate, a corrected failure probability, a spare part condition, and a preventive maintenance plan of each of a plurality of prediction targets 30.

(Processing flow)

FIG. 18 is a flowchart showing an example of processing of the failure prediction device according to the third embodiment of the present disclosure.
Hereinafter, a method of evaluating a failure rate and a failure probability and a method of evaluating a spare part condition and a preventive maintenance plan using the failure prediction device 1 will be described with reference to FIG. 18.
First, a setting unit 100 performs a selection of a failure prediction model for each of the plurality of prediction targets 30 (step S300) and a setting of an objective function and a constraint condition of the entire product 3 (step S301). Processing of these is the same as that in the first embodiment (steps S100 to S101 in FIG. 4).
Next, the failure prediction device 1 evaluates and corrects a failure rate of the prediction target 30 in steps S302 to S304 and adjusts a spare part condition in step S305. Processing in steps S302 to S305 is the same as that in the second embodiment (steps S202 to S205 in FIG. 11).
Also, the failure prediction device 1 evaluates and corrects a failure probability of the prediction target 30 in steps S306 to S308, and adjusts a preventive maintenance plan in step S309. Processing in steps S306 to S309 is the same as that in the second embodiment (steps S213 to S216 in FIG. 11).
Next, the third adjustment unit 110 calculates a sensitivity of an objective variable (a reliability or a total cost) of all the prediction targets 30 of the product 3 on the basis of various parameters (FIGS. 12 to 16) calculated by the first adjustment unit 108 and the second adjustment unit 109 when the spare part condition and the preventive maintenance plan are adjusted (step S310).
For example, the third adjustment unit 110 creates a Pareto efficiency graph G42 shown in FIG. 16 for each of the prediction targets 30. Also, between a reliability of the prediction target 30 and a total cost of maintenance, the third adjustment unit 110 sets whichever set in advance or whichever designated by a user A as the objective variable. Then, the third adjustment unit 110 creates a regression expression for the objective variable (a reliability $R_i$ or a total cost $T_i$) of the prediction target 30 using the preventive maintenance cost of the prediction target 30 as an explanatory variable $M_i$. When the product 3 has n prediction targets 30, i is an integer from 1 to n.
Also, the third adjustment unit 110 calculates the reliability sensitivity and the total cost sensitivity of the prediction target 30 in a preventive maintenance cost $M_{i,j}$ (j = 0) in an initial maintenance plan. The initial maintenance plan is a maintenance plan set by the user A in advance. Also, a plurality of initial maintenance plans may be set. The reliability sensitivity is expressed by the following expression (2). Further, the total cost sensitivity is represented by the following expression (3). Here, i represents an equipment ID, and j represents a maintenance condition ID for equipment or a facility.
[Math. 2]

$$\frac{\partial R_i}{\partial M_i}\bigg|_{M_i=M_{i,j}} \quad \cdot\cdot\cdot(2)$$

[Math. 3]

$$\frac{\partial T_i}{\partial M_i}\bigg|_{M_i = M_{i,j}} \quad \cdot \cdot \cdot (3)$$

The third adjustment unit 110 calculates the reliability sensitivity and the total cost sensitivity for all the prediction targets 30 constituting the product 3.

Next, the third adjustment unit 110 sets a maintenance menu of the entire product 3 on the basis of the calculated reliability sensitivity and total cost sensitivity (step S311).

Specifically, the third adjustment unit 110 extracts a high-sensitivity variable that is an explanatory variable (the preventive maintenance cost $M_i$) that greatly improves the objective variable, and a low-sensitivity variable that is an explanatory variable having a small influence on the objective variable. Then, the third adjustment unit 110 sets the maintenance menu of the product 3 to increase the high-sensitivity variable (increase the preventive maintenance cost). Also, the third adjustment unit 110 may set the maintenance menu of the product 3 so that the low-sensitivity variable is maintained as it is or is reduced.

For example, if the objective variable is the reliability, the third adjustment unit 110 extracts top X% (for example, 10%) of the explanatory variables (the preventive maintenance cost $M_i$) having a large influence on increasing the reliability as the high-sensitivity variable, and extracts top Y% (for example, 10%) of the explanatory variables having a small influence on the reliability as the low-sensitivity variable. Further, X and Y are arbitrary values, and may be set to different values from each other. The third adjustment unit 110 sets the maintenance menu to increase the preventive maintenance cost $M_i$ that greatly improves the reliability, that is, to prioritize the preventive maintenance of the prediction target 30 related to the preventive maintenance cost $M_i$. Also, the third adjustment unit 110 may maintain the priority of the preventive maintenance as it is or decrease the priority for the prediction target 30 related to the preventive maintenance cost $M_i$ having a small influence on the reliability.

Also, for example, if the objective variable is the total cost, the third adjustment unit 110 extracts top X% of the explanatory variables (the preventive maintenance cost $M_i$) having a large influence on decreasing the total cost as the high-sensitivity variable, and extracts top Y% of the explanatory variables having a small influence on the total cost as the low-sensitivity variable. The third adjustment unit 110 sets the maintenance menu to increase the preventive maintenance cost $M_i$ that significantly reduces the total cost, that is, to prioritize the preventive maintenance of the prediction target 30 related to the preventive maintenance cost $M_i$. Also, the third adjustment unit 110 may maintain the priority of the preventive maintenance as it is or decrease the priority for the prediction target 30 related to the preventive maintenance cost $M_i$ having a small influence on the total cost.

Next, the first determination unit 105 (or the second determination unit 106) performs an estimation of the reliability, the operation rate, and the total cost of the entire product 3 on the basis of the corrected failure rate and the corrected failure probability of each prediction target 30 and the maintenance menu set in step S311 (step S312). This processing is the same as that in the second embodiment (steps S206 and S217 in FIG. 11). Also, processing in the subsequent steps S313 to S318 is the same as that in the second embodiment (steps S207 to S212 and S218 to S223 in FIG. 11).

Also, the third adjustment unit 110 may search for the maintenance menu with a maximum reliability or a minimum total cost within a range satisfying the constraint condition while calculating the sensitivity of the preventive maintenance cost $M_{i,j}$ (j = 1, 2, ···) in the updated maintenance plan (maintenance menu).

(Operation and effects)

As described above, the failure prediction device 1 according to the present embodiment further includes the third adjustment unit 110 that adjusts the spare part condition and the preventive maintenance plan of the entire product 3 to satisfy the constraint condition preset for the entire product 3 on the basis of the corrected failure rate, the corrected failure probability, the spare part condition, and the preventive maintenance plan of each of the plurality of prediction targets 30.

In this way, the failure prediction device 1 can optimize the maintenance plan of the entire product 3.

While the embodiments of the present disclosure have been described in detail above, the present invention is not limited thereto and some design changes are also possible within a range not departing from the technical idea of the present invention.

<Additional statement>

The failure prediction device, the failure prediction method, and the program described in the above-described embodiments are understood, for example, as follows.

(1) According to a first aspect of the present disclosure, a failure prediction device (1) includes a first evaluation unit (101) evaluating a failure rate that represents a probability of a random failure of a prediction target (30) using a statistical model generated on the basis of data related to failures of the prediction target (30), a second evaluation unit (102) evaluating a failure probability that represents a probability of a failure of the prediction target (30) due to aging deterioration using a physical model generated on the basis of design data of the prediction target (30), an acquisition unit (103) acquiring a qualitative evaluation result obtained by qualitatively evaluating the prediction target (30) for each of predetermined evaluation items, and a correction unit (104) calculating a corrected failure rate and a corrected failure probability by multiplying each of the failure rate and the failure probability by a correction coefficient based on the qualitative evaluation result.

In this way, the failure prediction device can predict a risk related to a failure of the prediction target with high accuracy by correcting the prediction results of the failure rate and the failure probability. Also, when the correction coefficient based on the qualitative evaluation result of the prediction target is applied to both the failure rate and the failure probability, the failure prediction device can evaluate both the random failure and the failure due to aging deterioration from a common perspective of a likelihood of failure.

(2) According to a second aspect of the present disclosure, the failure prediction device (1) according to the first aspect further includes a first determination unit (105) determining whether a spare part condition of the prediction target (30) satisfies a constraint condition preset for the prediction target (30) on the basis of the corrected failure rate, a second determination unit (106) determining whether a preventive maintenance plan of the prediction target (30) satisfies the constraint condition preset for the prediction target (30) on the basis of the corrected failure probability, and the proposal unit (107) proposing a review of a failure countermeasure corresponding to at least one of the evaluation items when at least one of the first determination unit (105) and the second determination unit (106) is determined to be not satisfying the constraint condition.

In this way, the failure prediction device can more accurately evaluate whether the prediction target satisfies the constraint condition using the failure rate and failure probability after correction by the qualitative evaluation result. Also, if the prediction target does not satisfy the constraint condition, the failure prediction device can propose a review of a failure countermeasure for the prediction target to the user.

(3) According to a third aspect of the present disclosure, the failure prediction device (1) according to the second aspect further includes a first adjustment unit (108) adjusting the spare part condition on the basis of the corrected failure rate.

In this way, the failure prediction device can set an optimal spare part condition with high accuracy on the basis of the corrected failure rate.

(4) According to a fourth aspect of the present disclosure, the failure prediction device (1) according to the second or third aspect further includes a second adjustment unit (109) adjusting the preventive maintenance plan on the basis of the corrected failure probability.

In this way, the failure prediction device 1 can set an optimal preventive maintenance plan with high accuracy on the basis of the corrected failure probability.

(5) According to a fifth aspect of the present disclosure, the failure prediction device (1) according to any one of the first to fourth aspects further includes a third adjustment unit (110) adjusting the spare part condition and the preventive maintenance plan of an entire product (3) to satisfy the constraint condition preset for the entire product (3) formed of a plurality of prediction targets (30) on the basis of the corrected failure rate, the corrected failure probability, the spare part condition, and the preventive maintenance plan of each of the plurality of prediction targets (30).

In this way, the failure prediction device can optimize the maintenance plan of the entire product.

(6) According to a sixth aspect of the present disclosure, a failure prediction method includes a step of evaluating a failure rate that represents a probability of a random failure of a prediction target (30) using a statistical model generated on the basis of data related to failures of the prediction target (30), a step of evaluating a failure probability that represents a probability of a failure of the prediction target (30) due to aging deterioration using a physical model generated on the basis of design data of the prediction target (30), a step of acquiring a qualitative evaluation result obtained by qualitatively evaluating the prediction target (30) for each of predetermined evaluation items, and a step of calculating a corrected failure rate and a corrected failure probability by multiplying each of the failure rate and the failure probability by a correction coefficient based on the qualitative evaluation result.

(7) According to a seventh aspect of the present disclosure, a program causes a computer of a failure prediction device (1) to execute a step of evaluating a failure rate that represents a probability of a random failure of a prediction target (30) using a statistical model generated on the basis of data related to failures of the prediction target (30), a step of evaluating a failure probability that represents a probability of a failure of the prediction target (30) due to aging deterioration using a physical model generated on the basis of design data of the prediction target (30), a step of acquiring a qualitative evaluation result obtained by qualitatively evaluating the prediction target (30) for each of predetermined evaluation items, and a step of calculating a corrected failure rate and a corrected failure probability by multiplying each of the failure rate and the failure probability by a correction coefficient based on the qualitative evaluation result.

[Industrial Applicability]

According to the failure prediction device, the failure prediction method, and the program according to the present disclosure, a risk related to a failure of a prediction target can be predicted with high accuracy.

[Reference Signs List]

1 Failure prediction device
10 CPU
100 Setting unit
101 First evaluation unit
102 Second evaluation unit
103 Acquisition unit
104 Correction unit
105 First determination unit
106 Second determination unit
107 Proposal unit
108 First adjustment unit
109 Second adjustment unit
110 Third adjustment unit
11 Memory
12 Storage
13 Connection interface
14 Communication interface
2A Display device
2B Input device
3 Product
30 Prediction target

Claims

1. A failure prediction device comprising:

a first evaluation unit evaluating a failure rate which represents a probability of a random failure of a prediction target using a statistical model generated on the basis of data related to failures of the prediction target;
a second evaluation unit evaluating a failure probability which represents a probability of a failure of the prediction target due to aging deterioration using a physical model generated on the basis of design data of the prediction target;
an acquisition unit acquiring a qualitative evaluation result obtained by qualitatively evaluating the prediction target for each of predetermined evaluation items; and
a correction unit calculating a corrected failure rate and a corrected failure probability by multiplying each of the failure rate and the failure probability by a correction coefficient based on the qualitative evaluation result.

2. The failure prediction device according to claim 1, further comprising:

a first determination unit determining whether a spare part condition of the prediction target satisfies a constraint condition preset for the prediction target on the basis of the corrected failure rate;
a second determination unit determining whether a preventive maintenance plan of the prediction target satisfies the constraint condition preset for the prediction target on the basis of the corrected failure probability; and
a proposal unit proposing a review of a failure countermeasure corresponding to at least one of the evaluation items when at least one of the first determination unit and the second determination unit is determined to be not satisfying the constraint condition.

3. The failure prediction device according to claim 2, further comprising a first adjustment unit adjusting the spare part condition on the basis of the corrected failure rate.

4. The failure prediction device according to claim 2 or 3, further comprising a second adjustment unit adjusting the preventive maintenance plan on the basis of the corrected failure probability.

5. The failure prediction device according to any one of claims 2 to 4, further comprising a third adjustment unit adjusting the spare part condition and the preventive maintenance plan of an entire product to satisfy the constraint condition preset for the entire product formed of a plurality of prediction targets on the basis of the corrected failure rate, the corrected failure probability, the spare part condition, and the preventive maintenance plan of each of the plurality of prediction targets.

6. A failure prediction method comprising:

a step of evaluating a failure rate which represents a probability of a random failure of a prediction target using a statistical model generated on the basis of data related to failures of the prediction target;
a step of evaluating a failure probability which represents a probability of a failure of the prediction target due to aging deterioration using a physical model generated on the basis of design data of the prediction target;
a step of acquiring a qualitative evaluation result obtained by qualitatively evaluating the prediction target for each of predetermined evaluation items; and
a step of calculating a corrected failure rate and a corrected failure probability by multiplying each of the failure rate and the failure probability by a correction coefficient based on the qualitative evaluation result.

7. A program causing a computer of a failure prediction device to execute:

a step of evaluating a failure rate which represents a probability of a random failure of a prediction target using a statistical model generated on the basis of data related to failures of the prediction target;
a step of evaluating a failure probability which represents a probability of a failure of the prediction target due to aging deterioration using a physical model generated on the basis of design data of the prediction target;
a step of acquiring a qualitative evaluation result obtained by qualitatively evaluating the prediction target for each of predetermined evaluation items; and
a step of calculating a corrected failure rate and a corrected failure probability by multiplying each of the failure rate and the failure probability by a correction coefficient based on the qualitative evaluation result.

# FIG. 1

# FIG. 2

FAILURE PREDICTION DEVICE — 1

CPU — 10

- 100 — SETTING UNIT
- 101 — FIRST EVALUATION UNIT
- 102 — SECOND EVALUATION UNIT
- 103 — ACQUISITION UNIT
- 104 — CORRECTION UNIT
- 105 — FIRST DETERMINATION UNIT
- 106 — SECOND DETERMINATION UNIT
- 107 — PROPOSAL UNIT

MEMORY — 11

STORAGE — 12

CONNECTION INTERFACE — 13

COMMUNICATION INTERFACE — 14

DISPLAY DEVICE — 2A

INPUT DEVICE — 2B

FAILURE STATISTICS DB — 50

DESIGN/MANUFACTURING /OPERATION DB — 51

EVALUATION DB — 52

MAINTENANCE PLAN DB — 53

COST DB — 54

# FIG. 3

<POINT ALLOCATION TABLE FOR QUALITATIVE EVALUATION>

| FAILURE FREQUENCY CORRECTION COEFFICIENT | | Point |
|---|---|---|
| 1 | Universal Subfactor | [-1,5] |
| 1.1 | Appearance | {-1,0,1} |
| 1.2 | Natural Environment | {0,1,2} |
| 1.3 | Uncertain Natural Load | {0,1,2} |
| 2 | Design Subfactor | [0,4] |
| 2.1 | Complexity | {0,1} |
| 2.2 | Standard and Code | {0,1} |
| 2.3 | Life Consumption | {1,0,1,2} |
| 3 | Stability and Matureness Subfactor | [-4,5] |
| 3.1 | Unexpected Damage Detection | {-1,0,1} |
| 3.2 | Unplanned Failure Detection | {-1,0,1} |
| 3.3 | Specialty and Matureness | {-1,0,1} |
| 3.4 | Similarity | [0,1] |
| 3.5 | Measures | {-1,0,1} |
| 4 | Structural Subfactor | [0,2] |
| 4.1 | Structural Criticality | {0,1} |
| 4.2 | Damage Rate | {0,1} |
| 5 | Monitoring Subfactor | [-1,5] |
| 5.1 | Discrepancy Factor | {-1,0,1} |
| 5.2 | Monitoring and Inspection(Time) | {0,1} |
| 5.3 | Monitoring and Inspection(Space) | {0,1} |
| 5.4 | Detectability(Visibility) | {0,1} |
| 5.5 | Detectability(Accessibility) | {0,1} |

# FIG. 4

```
START
  │
  ▼
SELECTION OF FAILURE          ~S100
PREDICTION MODEL
  │
  ▼
SETTING OF OBJECTIVE FUNCTION  ~S101
AND CONSTRAINT CONDITION
```

S102 — EVALUATION OF FAILURE RATE

S103 — ACQUISITION OF QUALITATIVE EVALUATION RESULT

S104 — CALCULATION OF CORRECTED FAILURE RATE

S105 — EVALUATION ON BASIS OF CURRENT SPARE PART CONDITION

S106 — IS CONSTRAINT CONDITION SATISFIED?
YES

NO

S107 — PROPOSAL OF REVIEW

S108 — RE-ACQUISITION OF EVALUATION POINT

S109 — RECALCULATION OF CORRECTED FAILURE RATE

S110 — RESETTING OF CONSTRAINT CONDITION

S111 — RE-EVALUATION ON BASIS OF CURRENT SPARE PART CONDITION

EVALUATION OF FAILURE PROBABILITY — S112

ACQUISITION OF QUALITATIVE EVALUATION RESULT — S113

CALCULATION OF CORRECTED FAILURE PROBABILITY — S114

EVALUATION ON BASIS OF CURRENT PREVENTIVE MAINTENANCE PLAN — S115

S116 — IS CONSTRAINT CONDITION SATISFIED?
YES

NO

PROPOSAL OF REVIEW — S117

RE-ACQUISITION OF EVALUATION POINT — S118

RECALCULATION OF CORRECTED FAILURE PROBABILITY — S119

RESETTING OF CONSTRAINT CONDITION — S120

RE-EVALUATION ON BASIS OF CURRENT PREVENTIVE MAINTENANCE PLAN — S121

END

# FIG. 5

<EXAMPLE 1 OF FAILURE RATE AFTER CORRECTION>

# FIG. 6

<EXAMPLE 2 OF FAILURE RATE AFTER CORRECTION>

# FIG. 7

<EXAMPLE 1 OF FAILURE PROBABILITY AFTER CORRECTION (WITHOUT REPLACEMENT)>

G20

FAILURE PROBABILITY AFTER CORRECTION

FAILURE PROBABILITY BEFORE CORRECTION

FAILURE PROBABILITY F

TIME

# FIG. 8

<EXAMPLE 2 OF FAILURE PROBABILITY AFTER CORRECTION (WITH REPLACEMENT)>

G21

FAILURE PROBABILITY AFTER CORRECTION

FAILURE PROBABILITY BEFORE CORRECTION

FAILURE PROBABILITY F

TIME

t1

# FIG. 9

<EXAMPLE 3 OF FAILURE PROBABILITY AFTER CORRECTION (WITH REPLACEMENT)>

FIG. 10

FAILURE PREDICTION DEVICE ~1

CPU ~10

100 — SETTING UNIT

101 — FIRST EVALUATION UNIT

102 — SECOND EVALUATION UNIT

103 — ACQUISITION UNIT

104 — CORRECTION UNIT

105 — FIRST DETERMINATION UNIT

106 — SECOND DETERMINATION UNIT

107 — PROPOSAL UNIT

108 — FIRST ADJUSTMENT UNIT

109 — SECOND ADJUSTMENT UNIT

MEMORY ~11

STORAGE ~12

CONNECTION INTERFACE ~13

COMMUNICATION INTERFACE ~14

DISPLAY DEVICE ~2A

INPUT DEVICE ~2B

FAILURE STATISTICS DB ~50

DESIGN/MANUFACTURING /OPERATION DB ~51

EVALUATION DB ~52

MAINTENANCE PLAN DB ~53

COST DB ~54

EP 4 339 851 A1

# FIG. 11

START

SELECTION OF FAILURE
PREDICTION MODEL — S200

SETTING OF OBJECTIVE FUNCTION
AND CONSTRAINT CONDITION — S201

S202 — EVALUATION OF FAILURE RATE

EVALUATION OF FAILURE
PROBABILITY — S213

S203 — ACQUISITION OF QUALITATIVE
EVALUATION RESULT

ACQUISITION OF QUALITATIVE
EVALUATION RESULT — S214

S204 — CALCULATION OF CORRECTED
FAILURE RATE

CALCULATION OF CORRECTED
FAILURE PROBABILITY — S215

S205 — ADJUSTMENT OF SPARE
PART CONDITION

ADJUSTMENT OF PREVENTIVE
MAINTENANCE PLAN — S216

S206 — EVALUATION ON BASIS
OF SPAREPART CONDITION
AFTER ADJUSTMENT

EVALUATION ON BASIS OF
PREVENTIVE MAINTENANCE
PLAN AFTER ADJUSTMENT — S217

S207
IS
CONSTRAINT CONDITION
SATISFIED?     YES

YES     S218
IS
CONSTRAINT CONDITION
SATISFIED?

NO

NO

S208 — PROPOSAL OF REVIEW

PROPOSAL OF REVIEW — S219

S209 — RE-ACQUISITION OF
EVALUATION POINT

RE-ACQUISITION OF
EVALUATION POINT — S220

S210 — RECALCULATION OF CORRECTED
FAILURE RATE

RECALCULATION OF CORRECTED
FAILURE PROBABILITY — S221

S211 — RESETTING OF CONSTRAINT
CONDITION

RESETTING OF CONSTRAINT
CONDITION — S222

S212 — RE-EVALUATION ON BASIS OF
SPARE PART CONDITION
AFTER ADJUSTMENT

RE-EVALUATION ON BASIS OF
PREVENTIVE MAINTENANCE
PLAN AFTER ADJUSTMENT — S223

END

# FIG. 12

<PROBABILITY DISTRIBUTION OF NUMBER OF TIMES OF FAILURE>                    G30

# FIG. 13

# FIG. 14

G40

AMOUNT OF
DAMAGE[-]

Pf                          Pf

BREAKAGE
LIMIT

TIME

REPLACEMENT CYCLE        REPLACEMENT CYCLE

SERVICE PROVISION PERIOD

# FIG. 15

G41

AMOUNT

TOTAL MAINTENANCE COST

POST-MAINTENANCE COST
(EXPECTED VALUE)

PREVENTIVE MAINTENANCE COST

REPLACEMENT CYCLE

OPTIMAL REPLACEMENT CYCLE
(MINIMIZED TOTAL MAINTENANCE COST)

FIG. 16

FIG. 17

FAILURE PREDICTION DEVICE — 1

CPU — 10

100 — SETTING UNIT

101 — FIRST EVALUATION UNIT

102 — SECOND EVALUATION UNIT

103 — ACQUISITION UNIT

104 — CORRECTION UNIT

105 — FIRST DETERMINATION UNIT

106 — SECOND DETERMINATION UNIT

107 — PROPOSAL UNIT

108 — FIRST ADJUSTMENT UNIT

109 — SECOND ADJUSTMENT UNIT

110 — THIRD ADJUSTMENT UNIT

MEMORY — 11

STORAGE — 12

CONNECTION INTERFACE — 13

COMMUNICATION INTERFACE — 14

DISPLAY DEVICE — 2A

INPUT DEVICE — 2B

FAILURE STATISTICS DB — 50

DESIGN/MANUFACTURING /OPERATION DB — 51

EVALUATION DB — 52

MAINTENANCE PLAN DB — 53

COST DB — 54

EP 4 339 851 A1

FIG. 18

```
                          ┌─────────┐
                          │  START  │
                          └────┬────┘
                               ▼
              ┌──────────────────────────────┐
              │  SELECTION OF FAILURE         ├── S300
              │  PREDICTION MODEL             │
              └──────────────┬───────────────┘
                             ▼
              ┌──────────────────────────────┐
              │  SETTING OF OBJECTIVE FUNCTION├── S301
              │  AND CONSTRAINT CONDITION     │
              └──────┬────────────────┬───────┘
                     ▼                ▼
   ┌─────────────────────────┐  ┌─────────────────────────┐
S302  EVALUATION OF FAILURE RATE   EVALUATION OF FAILURE    S306
   └────────────┬────────────┘    PROBABILITY
                ▼                └────────────┬────────────┘
   ┌─────────────────────────┐                ▼
S303  ACQUISITION OF QUALITATIVE  ┌─────────────────────────┐
      EVALUATION RESULT            ACQUISITION OF QUALITATIVE S307
   └────────────┬────────────┘     EVALUATION RESULT
                ▼                └────────────┬────────────┘
   ┌─────────────────────────┐                ▼
S304  CALCULATION OF CORRECTED   ┌─────────────────────────┐
      FAILURE RATE                CALCULATION OF CORRECTED   S308
   └────────────┬────────────┘    FAILURE PROBABILITY
                ▼                └────────────┬────────────┘
   ┌─────────────────────────┐                ▼
S305  ADJUSTMENT OF SPARE        ┌─────────────────────────┐
      PART CONDITION              ADJUSTMENT OF PREVENTIVE   S309
   └────────────┬────────────┘    MAINTENANCE PLAN
                │                └────────────┬────────────┘
                └────────────┬───────────────┘
                             ▼
              ┌──────────────────────────────┐
              │  CALCULATION OF SENSITIVITY OF├── S310
              │  OBJECTIVE VARIABLE OF EACH   │
              │  PREDICTION TARGET            │
              └──────────────┬───────────────┘
                             ▼
              ┌──────────────────────────────┐
              │  SETTING OF MAINTENANCE MENU  ├── S311
              │  ON BASIS OF SENSITIVITY      │
              └──────────────┬───────────────┘
                             ▼
              ┌──────────────────────────────┐
              │  EVALUATION OF RELIABILITY OR ├── S312
              │  LIKE                         │
              └──────────────┬───────────────┘
                             ▼
                          ◇ S313
                      IS CONSTRAINT CONDITION
          NO ◄──────    SATISFIED?
          │                   │ YES
          ▼                   ▼
   ┌──────────────────┐   ┌─────────┐
S314  PROPOSAL OF REVIEW    │   END   │
   └────────┬─────────┘   └─────────┘
            ▼
   ┌──────────────────┐
S315  RE-ACQUISITION OF
      EVALUATION POINT
   └────────┬─────────┘
            ▼
   ┌──────────────────┐
S316  RECALCULATION OF CORRECTED
      FAILURE RATE AND CORRECTED
      FAILURE PROBABILITY
   └────────┬─────────┘
            ▼
   ┌──────────────────┐
S317  RESETTING OF CONSTRAINT
      CONDITION
   └────────┬─────────┘
            ▼
   ┌──────────────────┐
S318  RE-EVALUATION OF
      RELIABILITY OR LIKE
   └──────────────────┘
```

## INTERNATIONAL SEARCH REPORT

| International application No. |
|---|
| **PCT/JP2022/026718** |

| A. | CLASSIFICATION OF SUBJECT MATTER |
|---|---|

*G06Q 10/00*(2012.01)i; *G06Q 50/04*(2012.01)i
FI:   G06Q10/00 300; G06Q50/04

According to International Patent Classification (IPC) or to both national classification and IPC

| B. | FIELDS SEARCHED |
|---|---|

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 松本 俊作, 藤原 直子, 中馬 康晴, プラント稼働率・経済性向上のための知識ベースRAM分析の実機展開, 三菱重工技報 [online], 2020, vol. 57 no. 1, pp. 1-7, [retrieved on 21 September 2022], internet <URL: http://www.mhi.co.jp/technology/review/jp/abstractj-57-1-130.html>, <URL: http://www.mhi.co.jp/technology/review/en/abstractj-57-1-130.html> (MATSUMOTO, Shunsaku, FUJIWARA, Naoko, NAKAJIMA, Yasuharu. Implementation of Knowledge-based RAM Analysis for Improvement of Plant Availability and Economic Efficiency. Mitsubishi Heavy Industries Technical Review.) p. 1, line 8 to p. 6, line 7, fig. 1-6 | 1, 6-7 |
| A | | 2-5 |
| A | JP 2016-126728 A (MITSUBISHI HEAVY INDUSTRIES, LTD.) 11 July 2016 (2016-07-11) entire text, all drawings | 1-7 |
| A | WO 2018/105104 A1 (MITSUBISHI ELECTRIC CORP.) 14 June 2018 (2018-06-14) entire text, all drawings | 1-7 |
| A | JP 2019-113345 A (MITSUBISHI HITACHI POWER SYSTEMS, LTD.) 11 July 2019 (2019-07-11) entire text, all drawings | 1-7 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/026718** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2018-10636 A (HITACHI, LTD.) 18 January 2018 (2018-01-18)<br>        entire text, all drawings | 1-7 |
| A | JP 2009-53938 A (TOSHIBA CORP.) 12 March 2009 (2009-03-12)<br>        entire text, all drawings | 1-7 |
| A | JP 2007-108843 A (TOSHIBA CORP.) 26 April 2007 (2007-04-26)<br>        entire text, all drawings | 1-7 |
| A | JP 2010-90899 A (C.R.F. SOCIETA CONSORTILE PER AZIONI) 22 April 2010<br>(2010-04-22)<br>        entire text, all drawings | 1-7 |
| A | US 2017/0160338 A1 (INTEL CORP.) 08 June 2017 (2017-06-08)<br>        entire text, all drawings | 1-7 |

**INTERNATIONAL SEARCH REPORT**
Information on patent family members

| International application No. |
| --- |
| **PCT/JP2022/026718** |

| Patent document cited in search report | | | Publication date (day/month/year) | Patent family member(s) | | | Publication date (day/month/year) |
| --- | --- | --- | --- | --- | --- | --- | --- |
| JP | 2016-126728 | A | 11 July 2016 | (Family: none) | | | |
| WO | 2018/105104 | A1 | 14 June 2018 | TW | 201822080 | A | |
| | | | | entire text, all drawings | | | |
| | | | | KR | 10-2019-0071812 | A | |
| | | | | CN | 110023967 | A | |
| JP | 2019-113345 | A | 11 July 2019 | WO | 2019/123792 | A1 | |
| | | | | entire text, all drawings | | | |
| | | | | CN | 111465837 | A | |
| JP | 2018-10636 | A | 18 January 2018 | US | 2018/0017467 | A1 | |
| | | | | entire text, all drawings | | | |
| | | | | EP | 3270252 | A1 | |
| JP | 2009-53938 | A | 12 March 2009 | (Family: none) | | | |
| JP | 2007-108843 | A | 26 April 2007 | (Family: none) | | | |
| JP | 2010-90899 | A | 22 April 2010 | US | 2005/0137776 | A1 | |
| | | | | entire text, all drawings | | | |
| | | | | EP | 1541829 | A1 | |
| | | | | IT | TO20030999 | A1 | |
| US | 2017/0160338 | A1 | 08 June 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021116247 A
- JP 5802619 B